# EUROPÄISCHE PATENTANMELDUNG

(11) **EP 4 283 983 A2**
(43) Veröffentlichungstag der Anmeldung: **29.11.2023**
(21) Anmeldenummer: 23187782.0
(22) Anmeldetag: 18.01.2018
(51) Int. Cl.: H04N 5/76

(54) **AUSLESEANORDNUNG FÜR EINEN BILDSENSOR, BILDSENSOR-SYSTEM UND VERFAHREN ZUM AUSLESEN EINES BILDSENSORS**

(30) Priorität: 18.01.2017 EP 17152077; 19.01.2017 EP 17152299
(62) Teilanmeldung aus: 18700438.7
(71) Anmelder: Fraunhofer-Gesellschaft zur Förderung der angewandten Forschung e.V., 80686 München (DE)
(72) Erfinder: DÖGE, Jens, 01069 Dresden (DE)
(74) Vertreter: Burger, Markus

(57) **Zusammenfassung**

Eine Ausleseanordnung für einen Bildsensor ist ausgelegt, um parallel eine Mehrzahl von Bildsensor-Analogsignalen, die von dem Bildsensor erfasste Helligkeitswerte in analoger Form beschreiben, von einer Mehrzahl von Spaltenleitungen des Bildsensors zu empfangen. Die Ausleseanordnung ist ausgelegt, um auszuwählen, welche Teilmenge einer Mehrzahl von durch die Bildsensor-Analogsignale dargestellten oder auf den Bildsensor-Analogsignalen basierenden Analogwerten in einem Analogspeicher für eine weitere Verarbeitung gespeichert werden, und um die Speicherung der ausgewählten Analogwerte in dem Analogspeicher zu veranlassen oder um die ausgewählten Analogwerte in dem Analogspeicher zu speichern.

## Beschreibung

### Technisches Gebiet

Ausführungsbeispiele gemäß der Erfindung beziehen sich auf eine Ausleseanordnung für einen Bildsensor.

Weitere Ausführungsbeispiele gemäß der Erfindung beziehen sich auf ein BildsensorSystem.

Weitere Ausführungsbeispiele gemäß der Erfindung beziehen sich auf ein Verfahren zum Auslesen eines Bildsensors.

Ausführungsbeispiele gemäß der Erfindung beziehen sich auf eine Architektur für das Komprimieren der auszulesenden Bildsensoren.

### Hintergrund der Erfindung

Die Erfassung von Bildern mit Hilfe von Bildsensoren ist in vielen Anwendungen sinnvoll. Insbesondere ist es in den Fällen wünschenswert, die durch die Bildsensoren gewonnenen Bilddaten weiterzuverarbeiten, um Informationen über einen Bildinhalt zu erhalten.

Bildsensoren mit Pixel-paralleler (bzw. Bildpunkt-paralleler) Signalverarbeitung in einer Sensormatrix liefern Zwischenergebnisse und Endergebnisse, die dann an eine nächste Verarbeitungseinheit oder zu einer Ausgabeschnittstelle übertragen werden. Entstehen dabei sehr viele Daten, kann es sein, dass die Bandbreite zu gering ist und die Ergebnisse nicht abgeholt werden können.

Für Pixel-parallele bzw. Bildpunkt-parallele Architekturen mit einer starken lokalen Kompression der Daten wurden Konzepte wie z. B. das Ereignis-gesteuerte Auslesen anhand einer Adresse ("Address-Event Representation": AER : "Adress-Ereignis-Darstellung) entwickelt. In den Pixelzellen bzw. Bildpunktzellen wird dabei eine Bildverarbeitung durchgeführt, die bei Erreichen vordefinierter Ergebnisse den Ort des Auftretens an den Rand der Sensormatrix übermittelt. Eine externe Logik registriert dies anhand der Adresse und führt ein sequenzielles Auslesen der Ergebnisse durch. Bei sehr hohen Ereignisraten ist das Auslesen relativ ineffizient oder es kann sogar passieren, dass Ereignisse verlorengehen.

Aufgrund der sehr großen Komplexität der dazu eingesetzten Pixelzellen bzw. Bildpunktzellen und der damit verbundenen ungünstigen optischen Eigenschaften wie
- eine geringe Auflösung bzw.
- ein geringer Füllfaktor
wurden für bestimmte Anwendungen, wie z. B. Laserlichtschnitt, spezielle Bildsensor-Systeme-auf-einen-Chip (auch als "Bildsensor-Systems-on-Chip" oder "SoC" bezeichnet) mit Spalten-paralleler Bildverarbeitung entwickelt (siehe z.B. Referenzen [2] und [1]).

Es wurde erkannt, dass erst solche Architekturen mit relativ einfachen Pixelzellen bzw. Bildpunktzellen und einer komplexen Verarbeitungslogik zur Verarbeitung von verschiedenen Signaltypen (auch als "Mixed-Signal-Verarbeitungslogik" bezeichnet) außerhalb des Bildfeldes eine sehr hohe Bildverarbeitungsgeschwindigkeit (z. B. einen Laserlichtschnitt mit 100 kHz Profilrate) in Kombination mit einem Pixelabstand bzw. Bildpunktabstand ähnlich dem in industriellen Bildsensoren (z. B. 8,75 µm bei Quelle [1]) ermöglichen.

In Anbetracht der obigen Ausführungen besteht ein Bedarf an einem Konzept, dass eine Auswertung von Bildsensordaten in effizienter Weise ermöglicht.

### Zusammenfassung der Erfindung

Ein Ausführungsbeispiel gemäß der Erfindung schafft eine Ausleseanordnung für einen Bildsensor. Die Ausleseanordnung ist ausgelegt, um parallel eine Mehrzahl von Bildsensor-Analogsignalen, die von dem Bildsensor erfasste Helligkeitswerte in analoger Form beschreiben, von einer Mehrzahl von Spaltenleitungen des Bildsensors zu empfangen. Die Ausleseanordnung ist ferner ausgelegt, um auszuwählen, welche Teilmenge einer Mehrzahl von durch die Bildsensor-Analogsignale dargestellten oder auf den Bildsensor-Analogsignalen basierenden Analogwerten in einem Analogspeicher für eine weitere Verarbeitung gespeichert werden, und um die Speicherung der ausgewählten Analogwerte in dem Analogspeicher zu veranlassen, oder um die ausgewählten Analogwerte in dem Analogspeicher zu speichern.

Diese Ausleseanordnung basiert auf der Erkenntnis, dass eine Vorauswahl von Analogwerten, die durch Bildsensor-Analogsignale dargestellt werden bzw. die von den Bildsensor-Analogsignalen (typischerweise durch eine bevorzugt schnelle analoge Signalverarbeitung) abgeleitet werden, und eine Einspeicherung dieser Analogwerte in einen Analogspeicher zu einer Verringerung der Datenmenge führt, die digital (beispielsweise im Anschluss an eine hochauflösende Analog-Digital-Wandlung) verarbeitet werden muss. Somit erfolgt bereits auf der Ebene der Analogwerte eine Reduktion des Datenaufkommens, so dass es nicht mehr erforderlich ist, Analogwerte von allen Bildpunkten des Bildsensors in aufwändiger Weise in digitale Signale zu wandeln. Der Aufwand bei der Analog-zu-Digital-Wandlung von Bildsensor-Analogsignalen verringert sich somit. Im Übrigen kann auch die Datenmenge an digital zu übertragenden Bildsensorinformationen deutlich verringert werden, was die Leistungsfähigkeit eines Systems, das einen Bildsensor sowie die Ausleseanordnung umfasst, deutlich erhöht bzw. eine erforderliche Datenrate deutlich verringert. Durch die Abspeicherung ausgewählter Analogwerte (also beispielsweise nicht aller Analogwerte von allen Bildpunkten des Bildsensors) in einen geeignet organisierten Analogspeicher kann beispielsweise erreicht werden, dass die Analogwerte schnell und effizient zugreifbar sind. Im Übrigen kann bei geeigneter Einspeicherung der Analogwerte in den Analogspeicher auch eine gewisse Sortierung der Analogwerte erfolgen, so dass z. B. Analogwerte, die nach einer Analog-zu-Digital-Wandlung gemeinsam zu verarbeiten sind, in einem zusammenhängenden Bereich des Analogspeichers abgelegt werden können. Dadurch kann beispielsweise der Zugriff vereinfacht werden, und ein Mehraufwand zur Umsortierung digitalisierter Werte kann verringert oder vermieden werden.

Im Übrigen kann durch eine geeignete Auswahl der Analogwerte, die in dem Analogspeicher gespeichert werden, eine Datenmenge sehr stark reduziert werden, wenn beispielsweise nur solche Analogwerte in den Analogspeicher eingespeichert werden, die aufgrund einer schnellen analogen Vorverarbeitung als relevant für eine spätere digitale Auswertung klassifiziert werden.

Zusammenfassend ist somit festzuhalten, dass die hier beschriebene Ausleseanordnung zur Verarbeitung von Bildsensor-Ausgangssignalen den Einsatz bei hohen Bildwiederholraten erleichtert und zudem ohne wesentliche Beeinträchtigungen der Eigenschaften eines Bildsensors (z. B. eines Füllfaktors) implementierbar ist.

Im Folgenden werden weitere optionale Aspekte von Ausführungsbeispielen gemäß der vorliegenden Erfindung beschrieben. Die im Folgenden beschriebenen Aspekte können beispielsweise einzeln oder zusammen mit der oben beschriebenen Ausleseanordnung kombiniert werden.

Bei einem Ausführungsbeispiel kann die Ausleseanordnung beispielsweise eine Spaltenparallele Verarbeitungseinheit aufweisen. Die Ausleseanordnung kann beispielsweise ausgelegt sein, um basierend auf einer Auswertung der Bildsensor-Analogsignale zu entscheiden, welche Teilmenge einer Mehrzahl von durch die Bildsensor-Analogsignale dargestellten oder auf den Bildsensor-Analogsignalen basierenden Analogwerten in einem Analogspeicher für eine weitere Verarbeitung gespeichert wird. Dabei können beispielsweise solche (oder nur solche) durch die Bildsensor-Analogsignale dargestellte oder auf den Bildsensor-Analogsignalen basierende Analogwerte in dem Analogspeicher für eine weitere Verarbeitung gespeichert werden, die von der Ausleseanordnung als relevant für eine weitere Verarbeitung (beispielsweise für eine Bestimmung einer Lage von Linien) klassifiziert werden. Es kann also die Auswerteeinrichtung beispielsweise durch eine schnelle analoge Vorverarbeitung (wie beispielsweise durch einen Schwellwert-Vergleich eines Analogwerts mit einem Schwellwert oder durch eine Differenzbildung zwischen zwei Analogwerten und einen anschließenden Vergleich der Differenz mit einem Schwellwert) entschieden werden, welche Analogwerte (bzw. welche Bildsensor-Analogsignale) als relevant zu beurteilen sind. Nur in der Ausleseanordnung als relevant klassifizierte Analogwerte können dann beispielsweise in den Analogspeicher für eine weitere Verarbeitung (längerfristig) gespeichert werden. Somit wird die zur Verfügung stehende Analogspeicher-Kapazität sinnvoll genutzt.

Insbesondere wurde auch erkannt, dass eine genaue Auswertung von Analogwerten (die auf Bildsensor-Analogsignalen basieren) oft vergleichsweise aufwändig ist, dass aber eine Entscheidung, ob Analogwerte überhaupt für eine weitere Auswertung relevant oder brauchbar sind, oftmals anhand von einfachen Kriterien erfolgen kann. Indem die Vorauswahl der für die weitere Verarbeitung relevanten Analogwerte bereits bei der Entscheidung, ob Analogwerte in dem Analogspeicher für eine weitere Verarbeitung gespeichert werden sollen, erfolgt, kann der zur Verfügung stehende Analogspeicher effizient genutzt werden, und es kann beispielsweise eine Analog-zu-Digital-Wandlung von durch die Ausleseanordnung als nicht relevant eingestuften Analogwerten vermieden werden. Insofern verringert sich unter Umständen auch der Aufwand bei der Analog-zu-Digital-Wandlung sowie bei der Übertragung der digitalen Ausgangssignale, die nach der Analog-zu-Digital-Wandlung entstehen.

Bei einem bevorzugten Ausführungsbeispiel ist die Ausleseanordnung ausgelegt, um zu erkennen, wenn ein Verlauf eines zu einer jeweiligen Bildspalte gehörenden Bildsensor-Analogsignals über eine Mehrzahl von Bildzeilen hinweg einen Verlauf aufweist, der eine vorgegebene Bedingung erfüllt. Die Ausleseanordnung kann beispielsweise ausgelegt sein, um ansprechend auf eine Erkennung, dass ein Verlauf eines zu einer jeweiligen Bildspalte gehörigen Bildsensor-Analogsignals über eine Mehrzahl von Bildzeilen hinweg einen Verlauf aufweist, der eine vorgegebene Bedingung erfüllt, eine Speicherung von Analogwerten, die den Verlauf beschreiben, in dem Analogspeicher zu veranlassen.

Somit kann beispielsweise durch die Ausleseanordnung Spalten-individuell entschieden werden, welche Analogwerte als relevant anzusehen sind. Diese Erkennung von relevanten Analogwerten kann beispielsweise erfolgen, indem im Verlauf eines zu einer jeweiligen Bildspalte gehörigen Bildsensor-Analogsignals über eine Mehrzahl von Bildzeilen hinweg analysiert wird. Wird dabei ein für eine Licht-Linie bzw. Laserlinie charakteristischer Verlauf festgestellt, so können beispielsweise Analogwerte von einer Folge benachbarter Bildzeilen derselben Bildspalte als relevante, in dem Analogspeicher abzuspeichernde Analogwerte erkannt werden und entsprechend behandelt werden.

Bei einem Ausführungsbeispiel kann die Ausleseanordnung ausgelegt sein, um eine analoge Vorverarbeitung der Bildsensor-Analogsignale vorzunehmen, um vorverarbeitete Signale zu erhalten. Die Ausleseanordnung kann dann ausgelegt sein, um auf den Bildsensor-Analogsignalen basierende Analogwerte, die durch die vorverarbeiteten Signale dargestellt werden, für die Speicherung in dem Analogspeicher auszuwählen. So kann beispielsweise eine Betragsbildung oder eine Differenzbildung zwischen mehreren Analogwerten erfolgen. Damit können besonders relevante Informationen in dem Analogspeicher abgelegt werden. Die Vorverarbeitung kann Im Übrigen auch dazu dienen bzw. dabei helfen, relevante Analogwerte zu erkennen bzw. einen charakteristischen Verlauf der Bildsensor-Analogsignale (beispielsweise über eine Mehrzahl von benachbarten Bildzeilen hinweg) zu erkennen.

Bei einem bevorzugten Ausführungsbeispiel ist die Ausleseanordnung ausgelegt, um ansprechend darauf, dass ein Bildsensor-Analogsignal oder ein auf einem Bildsensor-Analogsignal basierendes Signal (beispielsweise durch einen Vergleich zu einem Bildsensor-Analogsignal von einem räumlich benachbarten Bildpunkt, oder durch einen Vergleich zu einem Bildsensor-Analogsignal des gleichen Bildpunkts zu einem früheren Zeitpunkt) einen vorgegebenen Schwellwert in einer ersten Richtung und/oder in einer zweiten Richtung passiert, zu entscheiden, dass ein durch das jeweilige Bildsensor-Analogsignal dargestellter oder auf dem jeweiligen Bildsensor-Analogsignal basierender Analogwert in dem Analogspeicher für eine weitere Verarbeitung gespeichert wird. Somit kann in effizienter Weise das Vorhandensein relevanter und damit in dem Analogspeicher für eine Verarbeitung zu speichernder Analogwerte erkannt werden.

Bei einem bevorzugten Ausführungsbeispiel kann die Ausleseanordnung ausgelegt sein, um beim Passieren des vorgegebenen Schwellwerts (oder ansprechend auf das Passieren des vorgegebenen Schwellwerts) zusätzlich eine digitale Information zu speichern, die eine Information darüber trägt, bei Auslesen welcher Bildzeile des Bildsensors ein Passierend des vorgegebenen Schwellwerts erkannt wurde. Insofern kann die zusätzliche digitale Information eine Auskunft darüber geben, welcher Bildzeile (und/oder welcher Bildspalte) bzw. welchem Bildbereich in dem Analogspeicher eingespeicherte Analogwerte zugeordnet sind. Diese zusätzliche digitale Information kann dann bei einer Auswertung der in dem Analogspeicher abgelegten Analogwerte herangezogen werden. Die zusätzliche Detailinformation ist insbesondere dann hilfreich, wenn nicht ein gesamter Bildinhalt, sondern nur relevante Ausschnitte eines Bildinhalts (oder davon abgeleitete Analogwerte) in dem Analogspeicher gespeichert werden, da somit ein Rückschluss darauf ermöglicht wird, von welchen Bildzeilen oder Bildspalten oder Bildbereichen die in dem Analogspeicher gespeicherten Analogwerte stammen.

Bei einem weiteren bevorzugten Ausführungsbeispiel kann die Ausleseanordnung ausgelegt sein, um Spalten-individuell oder für verschiedene Spalten separat oder für verschiedene Gruppen von Spalten separat zu entscheiden, ob ein durch ein Bildsensor-Analogsignal einer jeweiligen Spaltenleitung dargestellter Analogwert oder ein auf dem Bildsensor-Analogsignal der jeweiligen Spaltenleitung basierender Analogwert in dem Analogspeicher für eine weitere Verarbeitung gespeichert werden soll (so dass beispielsweise basierend auf Bildsensor-Analogsignalen, die unterschiedlichen Bildspalten zugeordnet sind, Analogwerte, die unterschiedlichen Zeilenbereichen zugeordnet sind, in dem Analogspeicher gespeichert werden). Indem beispielsweise für jede Bildspalte nur die relevanten Analogwerte (z. B. die Analogwerte von relevanten Bildzeilen) gespeichert werden, kann der zur Verfügung stehende Analogspeicher effizient ausgenutzt werden. Dies ist beispielsweise hilfreich, wenn Linien schräg über einen Bildsensor verlaufen, so dass sie im Bereich einer ersten Bildspalte einen ersten Zeilenbereich beleuchten und bei einer davon verschiedenen zweiten Bildspalte einen anderen zweiten Zeilenbereich beleuchten. Für die erste Bildspalte werden dann beispielsweise Analogwerte des ersten Zeilenbereichs in dem Analogspeicher gespeichert, und für die zweite Bildspalte werden dann beispielsweise Analogwerte des zweiten Zeilenbereichs, der sich von dem ersten Zeilenbereich unterscheidet, in dem Analogspeicher gespeichert.

Bei einem bevorzugten Ausführungsbeispiel kann die Ausleseanordnung ausgelegt sein, um eine Konfigurations-Information zu erhalten und auszuwerten, die für verschiedene Spalten separat festlegt, von welche Bildzeilen durch die Bildsensor-Analogsignale dargestellte Analogwerte oder auf den Bildsensor-Analogsignalen basierende Analogwerte in den Analogspeicher für eine weitere Verarbeitung gespeichert werden sollen. Somit kann auch von außen, beispielsweise von einer übergeordneten Steuerung, vorgegeben werden, welche Analogwerte in dem Analogspeicher gespeichert werden sollen. Dies macht beispielsweise Sinn, wenn bereits ein gewisses Vorwissen über die interessierenden Bildbereiche vorliegt.

Bei einem bevorzugten Ausführungsbeispiel kann die Ausleseanordnung ausgelegt sein, um eine Speicherung der durch die Bildsensor-Analogsignale dargestellten oder auf den Bildsensor-Analogsignalen basierenden Analogwerte ohne vorherige Prüfung, ob die Analogwerte für eine weitere Verarbeitung erhalten werden sollen, zu veranlassen. In diesem Fall kann die Ausleseanordnung beispielsweise ausgelegt sein, um ein (beispielsweise unmittelbares oder sofortiges) Überschreiben der ohne vorherige Prüfung gespeicherten Analogwerte (beispielsweise durch die in einem nächsten Schritt von dem Bildsensor erhaltenen Analogwerte) zu veranlassen (beispielsweise durch geeignete Auswahl einer nächsten Schreibadresse, beispielsweise gleich der aktuellen Schreibadresse), wenn die Ausleseanordnung feststellt, dass der ohne vorherige Prüfung gespeicherte Analogwert nicht für eine weitere Verarbeitung (beispielsweise längerfristig) gespeichert werden soll. Auf diese Weise ist ein besonders schneller Betrieb des Analogspeichers möglich, da die Einspeicherung, die oftmals vergleichsweise zeitaufwändig ist, sofort durchgeführt werden kann, wenn der Analogwert vorliegt. Somit kann während des Einspeicher-Vorgangs entschieden werden, ob der eben eingespeicherte Analogwert auch für eine weitere Verarbeitung eingespeichert bleiben soll, oder ob der entsprechende Analogwert nach kurzer Zeit (beispielsweise "sofort", wenn also beispielsweise ein neuer Analogwert vorliegt) wieder überschrieben werden soll, ohne dass es zu einem Auslesen des Analogwerts kommt. Das Einspeichern eines Analogwerts in den Analogspeicher in Verbindung mit einem sofortigen Überschreiben des eingespeicherten Analogwerts (beispielsweise sobald ein nächster Analogwert vorliegt) wird hier nicht als Speichern des Analogwerts für eine weitere Verarbeitung betrachtet. Vielmehr bedeutet ein Speichern eines Analogwerts für eine weitere Verarbeitung ein längerfristiges Speichern des Analogwerts, so dass der Analogwert für einen späteren Ausleseprozess zur Verfügung steht. In anderen Worten, die Auswahl von Analogwerten zur Speicherung in den Analogspeicher für eine weitere Verarbeitung kann auch dadurch erfolgen, dass zunächst alle Analogwerte gespeichert werden und solche Analogwerte, die nicht zur Speicherung für die weitere Verarbeitung ausgewählt werden, kurzfristig (beispielsweise sofort bei Vorliegen des nächsten Analogwerts von dem nächsten Bildpunkt) überschrieben werden. Somit können die zeitlichen Abläufe beschleunigt bzw. parallelisiert werden, und es kann berücksichtigt werden, dass das Speichern des Analogwerts vergleichsweise lange Zeit benötigt.

Bei einem weiteren bevorzugten Ausführungsbeispiel kann die Ausleseanordnung ausgelegt sein, um aufeinanderfolgende, durch die Bildsensor-Analogsignale dargestellte oder auf den Bildsensor-Analogsignalen basierende Analogwerte nacheinander in einen als Ringpuffer angesteuerten oder ausgelegten (beispielsweise einer jeweiligen Spalte des Bildsensors zugeordneten) Bereich des Analogspeichers einzuspeichern oder entsprechend Speichern zu veranlassen. Dies kann beispielsweise derart erfolgen, dass ein zyklisches Überschreiben von Analogwerten in dem als Ringpuffer angesteuerten oder ausgelegten Bereich erfolgt. Somit kann beispielsweise erreicht werden, dass stets eine bestimmte Anzahl von einem aktuellen Analogwert vorausgehenden Analogwerten eingespeichert sind, was wiederum ermöglicht, dass auch die einem auslösenden Ereignis vorhergehenden Analogwerte gespeichert bleiben können. Beispielsweise kann bei Erkennung eines auslösenden Ereignisses veranlasst werden, dass in dem Ringpuffer keine vorher gespeicherten Analogwerte mehr überschrieben werden oder dass zumindest einige der in den Ringpuffer vor Erkennung des auslösenden Ereignisses eingespeicherten Analogwerte (für ein Auslesen) erhalten bleiben. Wird beispielsweise erkannt, dass ein Analogwert, der auf einem Bildsensor-Spaltensignal einer i-ten Bildzeile basiert, ein lokales Maximum aufweist, so können beispielsweise Analogwerte in dem Analogspeicher (für ein Auslesen) erhalten (längerfristig gespeichert) werden, die auf einer oder mehreren der i-ten Bildzeile (z. B. unmittelbar) vorhergehenden Bildzeilen basieren, und es können ebenso Analogwerte (für die spätere Verarbeitung) in den Analogspeicher eingespeichert werden, die auf einer oder mehreren der i-ten Bildzeile folgenden Bildzeilen basieren (so dass beispielsweise Analogsignale von einem Bereich um die i-te Bildzeile herum gleichzeitig in dem Analogspeicher gespeichert sind). Somit ist es nicht zwingend erforderlich, dass ein auslösendes Ereignis unmittelbar erkannt wird, wenn ein erster einzuspeichernder bzw. für eine weitere Verarbeitung beizubehaltender Analogwert vorliegt.

Bei einem bevorzugten Ausführungsbeispiel kann die Ausleseanordnung daher ausgelegt sein, um ansprechend auf eine Erkennung, dass in dem Ringpuffer eingespeicherte Analogwerte für eine weitere Verarbeitung gespeichert werden sollen (und beispielsweise über einen Zeitpunkt hinaus, an dem ein Überschreiben erfolgen würde, erhalten werden sollen), ein Überschreiben zu unterbinden (beispielsweise indem ein Schreiben von Analogwerten basierend auf der betreffenden Spaltenleitung abgebrochen wird oder indem ein neuer Speicherbereich als neuer Ringpuffer verwendet wird).

In einem bevorzugten Ausführungsbeispiel erfolgt eine Erkennung, dass in den Ringpuffer eingespeicherte Analogwerte für eine weitere Verarbeitung gespeichert (beispielsweise über einen Zeitpunkt hinaus, an dem ein Überschreiben erfolgen würde, erhalten) werden, basierend auf einer Erkennung eines lokalen oder absoluten Maximums eines Helligkeitswerts auf der Basis eines Bildsensor-Analogsignals. Somit können beispielsweise Analogwerte in dem Analogspeicher für eine weitere Verarbeitung beibehalten werden, die (beispielsweise in Zeilenrichtung) um einen Ort maximaler Helligkeit herum liegen. Dadurch kann beispielsweise bei einer nachgeordneten Verarbeitung (die beispielsweise auf einer digitalisierten Version der Analogwerte basieren kann) eine Position eines Abbilds einer Linie auf dem Bildsensor mit hoher Genauigkeit bestimmt werden, wobei beispielsweise solche Analogwerte, die nicht in der Nachbarschaft eines Helligkeitsmaximums liegen, zur Reduzierung einer Datenmenge verworfen werden können (beispielsweise durch ein Überschreiben in dem Analogspeicher).

Bei einem weiteren bevorzugten Ausführungsbeispiel kann die Ausgabeanordnung ausgelegt sein, um ansprechend auf eine Erkennung, dass Analogwerte für eine weitere Verarbeitung gespeichert werden sollen, eine feste Anzahl an Analogwerten für eine weitere Verarbeitung zu speichern. Alternativ (oder zusätzlich) kann die Ausleseanordnung ausgelegt sein, um ansprechend auf eine Erkennung, dass Analogwerte für eine weitere Verarbeitung gespeichert werden sollen, abhängig von den Analogwerten eine variable Anzahl an Analogwerten für eine weitere Verarbeitung zu speichern. Die Speicherung einer festen Anzahl an Analogwerten für eine weitere Verarbeitung kann beispielsweise als "Speichern mit festem Intervall" aufgefasst werden. Das Speichern einer variablen Anzahl von Analogwerten für eine weitere Verarbeitung kann beispielsweise als "Speichern mit dynamischem Intervall" aufgefasst werden. Die zuerst beschriebene Lösung bietet den Vorteil, dass eine Speicherbelegung klar definiert sein kann. Die zweite Alternative hingegen bietet eine größere Flexibilität und ermöglicht beispielsweise eine Anpassung der Anzahl der gespeicherten Analogwerte an eine Breite eines Abbilds eines Lichtstrahls oder an sonstige Eigenschaften eines Bildverlaufs, der das Speichern der Analogwerte für die weitere Verarbeitung ausgelöst hat.

Bei einem weiteren bevorzugten Ausführungsbeispiel kann die Ausleseanordnung ausgelegt sein, um selektiv Analogwerte in dem Analogspeicher zu speichern, die eine vorgegebene Bedingung erfüllen. Beispielsweise können Analogwerte in dem Analogspeicher gespeichert werden, die einen Helligkeitswert, der größer als ein Schwellwert ist, beschreiben. Dabei kann optional eine Hysterese verwendet werden. Hier kann z. B. ein "Speichern mit dynamischem Intervall" eingesetzt werden. Somit können beispielsweise selektiv nur solche Analogwerte im Analogspeicher gespeichert werden, die ausreichend relevanten Strukturen zugeordnet sind. Ein Bildhintergrund kann somit unterdrückt werden, und die Anzahl der eingespeicherten Analogwerte kann dementsprechend gering gehalten werden.

Bei einem weiteren bevorzugten Ausführungsbeispiel kann die Ausleseanordnung ausgelegt sein, um eine Information (beispielsweise in digitaler Form) zu speichern, die beschreibt, welche Teilmenge der Mehrzahl von durch die Bildsensor-Analogsignale dargestellten oder auf den Bildsensor-Analogsignalen basierenden Analogwerten in dem Analogspeicher für eine weitere Verarbeitung gespeichert wurde. Die Information kann beispielsweise beschreiben, welchen Bildzeilen die für die weitere Verarbeitung gespeicherten Analogwerte zugeordnet sind. Damit kann bei der Auswertung die Lage der Bildpunkte, auf denen die eingespeicherten Analogwerte basieren, berücksichtigt werden.

Bei einem weiteren bevorzugten Ausführungsbeispiel kann die Ausleseanordnung ausgelegt sein, um (beispielsweise durch ein Ansteuern des Bildsensors, um auszulesende Bildzeilen oder Bildspalten festzulegen, und/oder durch Ansteuern eines Multiplexers, der festlegt, in welcher Speicherzelle des Analogspeichers ein Analogwert gespeichert werden soll) eine Zuordnung zwischen einer Bildspalte und Spalten des Analogspeichers, in denen zu der Bildspalte gehörende Analogwerte gespeichert werden, zu variieren. Somit können beispielsweise zu einer Bildspalte gehörende Analogwerte in verschiedenen Speicherspalten des Analogspeichers abgespeichert werden. Dadurch können beispielsweise Analogwerte, die zu einer schräg über den Bildsensor verlaufenden Linie gehören, in einen (zumindest logisch, im Hinblick auf Speicherzeilen und Speicherspalten) im Wesentlichen rechteckigen Bereich des Analogspeichers gespeichert werden. Dadurch wird eine anschließende Auswertung der in dem Analogspeicher gespeicherten Analogwerte erleichtert, da typischerweise das Auslesen eines rechteckigen Bereichs des Analogspeichers einfacher möglich ist als das Auslesen eines durch schräge Begrenzungen definierten Bereichs des Analogspeichers. Im Übrigen kann der in dem Analogspeicher vorhandene Speicherplatz so auch effizienter ausgenutzt werden, da den verschiedenen Linienabschnitten beispielsweise verschiedene benachbarte rechteckige Bereiche in dem Analogspeicher zugeordnet werden können.

Bei einem bevorzugten Ausführungsbeispiel kann die Ausleseanordnung ausgelegt sein, um Analogwerte, die Bildpunkten zugeordnet sind, bei einem Einspeichern in den Analogspeicher umzuordnen. Beispielsweise können Analogwerte von Bildpunkten, die an Mittelpunkten entlang einer gebogenen oder gewinkelten Linie liegen, in einem linearen Bereich des Analogspeichers gespeichert werden, also beispielsweise in einem fortlaufend adressierten Bereich oder in einem im Wesentlichen rechteckigen Bereich des Analogspeichers. Auf diese Weise kann wiederum ein Speicherplatzbedarf in dem Analogspeicher minimiert werden, und eine weitere Verarbeitung der umgeordneten oder verschobenen Analogwerte kann in besonders effizienter Weise erfolgen.

Bei einem bevorzugten Ausführungsbeispiel ist die Ausleseanordnung ausgelegt, um die Analogwerte in den Analogspeicher so einzuspeichern, dass aus dem Analogspeicher ausgelesene Signale und die Bildsensor-Analogsignale im Hinblick auf Signalpegel kompatibel sind. In anderen Worten, es kann beispielsweise eine Signalkompatibilität zwischen Ausgaben der Speicher und der Pixel erreicht werden.

Bei einem bevorzugten Ausführungsbeispiel ist die Ausleseanordnung ausgelegt, um analoge Rechenoperationen basierend auf aus dem Analogspeicher ausgelesenen Signalen auszuführen. Es können also beispielsweise analoge Rechenoperationen nur auf den Speichern durchgeführt werden.

Bei einem bevorzugten Ausführungsbeispiel ist die Ausleseanordnung ausgelegt, um analoge Rechenoperationen auszuführen, bei denen Bildsensor-Analogsignale und aus dem Analogspeicher ausgelesene Signale kombiniert werden. Es können also beispielsweise analoge Rechenoperationen mit Speicher und Sensormatrix ausgeführt werden.

Ein Ausführungsbeispiel gemäß der Erfindung schafft ein Bildsensorsystem. Das Bildsensorsystem umfasst einen Bildsensor, eine Ausleseanordnung, wie sie hierin beschrieben ist, sowie einen Analog-Digital-Wandler und eine digitale Verarbeitungseinrichtung. Der Analog-Digital-Wandler ist beispielsweise ausgelegt, um in dem Analogspeicher gespeicherte Analogwerte, oder davon abgeleitete Analogwerte, zu digitalisieren. Die digitale Verarbeitungseinrichtung ist beispielsweise ausgelegt, um basierend auf von dem Analog-Digital-Wandler gelieferten digitalen Signalen eine Bildinformation zu analysieren. So kann beispielsweise durch eine effiziente und schnelle analoge Vorverarbeitung ausgewählt werden, welche Analogwerte für eine anschließende Analog-Digital-Wandlung und für eine darauffolgende digitale weitere Verarbeitung in dem Analogspeicher gespeichert werden sollen. Die Datenmenge wird dabei reduziert, da der Analog-Digital-Wandler beispielsweise nicht mehr die Analogwerte aller Bildpunkte digitalisieren muss, sondern nur noch die Analogwerte der als relevant erkannten und in den Analogspeicher eingespeicherten Bildpunkte. Somit reduziert sich auch die Menge an digitalen Daten, die von dem Analog-Digital-Wandler zu der Verarbeitungseinrichtung transportiert werden müssen, wobei diese digitalen Daten bei manchen herkömmlichen Bildsensorsystemen einen Flaschenhals darstellen. Insgesamt ermöglicht das hier beschriebene Bildsensorsystem also eine besonders vorteilhafte Aufteilung der Verarbeitungsaufgaben, wobei eine Erkennung von relevanten Analogwerten sehr früh in der Verarbeitungskette und beispielsweise noch vor dem Analog-Digital-Wandler erfolgt. Die digitale Verarbeitungseinrichtung kann somit mit vergleichsweise geringer Rechenleistung realisiert werden. Dadurch ergeben sich deutliche Kostenvorteile und die Implementierung vereinfacht sich.

Bei einem bevorzugten Ausführungsbeispiel ist der Analog-Digital-Wandler ausgelegt, um die in dem Analogspeicher (130; 220; 920;1148;1248) gespeicherte Analogwerte (1150b-d, 1152b-d; 1260b-d,1262b-d,1 264b-d), oder davon abgeleitete Analogwerte, in einem separaten Ausleseprozess, der einem Auslesen des Bildsensors nachgelagert ist, zu digitalisieren. Es kann also beispielsweise eine nachgelagerte Digitalisierung aus Analogspeichern in einem separatem Ausleseprozess erfolgen.

Bei einem bevorzugten Ausführungsbeispiel ist die digitale Verarbeitungseinrichtung ausgelegt, um basierend auf von dem Analog-Digital-Wandler gelieferten digitalen Signalen eine Lage einer Linie in einem von dem Bildsensor erfassten Bild (beispielsweise mit Sub-Bildpunkt-Genauigkeit bzw. Sub-Pixel-Genauigkeit) zu erfassen. Es hat sich gezeigt, dass gerade bei Vorhandensein von Linien in einem Bild nur ein vergleichsweise geringer Anteil der Bildinformation relevant ist. Daher ist eine Vorauswahl der relevanten Bildinformationen, beispielsweise vor Einspeicherung von Analogwerten in den Analogspeicher, sehr hilfreich, da somit beispielsweise eine Einspeicherung und/oder eine Analog-zu-Digital-Wandlung von nicht-relevanten Analogwerten vermieden werden kann. Beispielsweise ist es möglich, dass nur Analogwerte von solchen Bildpunkten in den Analogspeicher eingespeichert werden, die zu Linien gehören, die beispielsweise eine bestimmte Mindest-Helligkeit aufweisen oder einen maximalen Abstand von einem Helligkeitsmaximum aufweisen. Eine derartige Vorauswahl von Analogwerten, die für die weitere Auswertung durch die digitale Verarbeitungseinrichtung relevant sind, kann beispielsweise mit vergleichsweise geringem Hardware-Aufwand erfolgen. Auf der anderen Seite kann beispielsweise die Bestimmung einer Lage einer Linie in einem von dem Bildsensor erfassten Bild mit einer Sub-Bildpunkt-Genauigkeit vergleichsweise aufwändig sein. Zu diesem Zweck kann beispielsweise die digitale Verarbeitungseinrichtung die vorausgewählten in den Analogspeicher eingespeicherten Analogwerte (nach einer entsprechenden Analog-zu-Digital-Wandlung) auswerten und beispielsweise basierend auf den durch die Analog-zu-Digital-Wandlung erhaltenen Werten eine oder mehrere Berechnungen durchführen. Somit wird ein hocheffizientes System geschaffen, bei dem die digitale Verarbeitungseinrichtung nur solche digitalisierten Werte verarbeiten muss, die vorab durch die Ausleseanordnung als relevant eingestuft wurden.

Im Ergebnis kann somit eine Lage einer Linie mit einer hohen Genauigkeit bestimmt werden, wobei der Verarbeitungsaufwand vergleichsweise gering gehalten wird.

Bei einem bevorzugten Ausführungsbeispiel ist die digitale Verarbeitungseinrichtung ausgelegt, um eine Information (beispielsweise in digitaler Form) auszuwerten, die beschreibt, welche Teilmenge der Mehrzahl von durch die Bildsensor-Analogsignale dargestellten oder auf den Bildsensor-Analogsignalen basierenden Analogwerten in dem Analogspeicher für eine weitere Verarbeitung gespeichert wurde. Beispielsweise kann die digitale Information beschreiben, zu welchen Bildzeilen oder zu welchen Bildbereichen die in den Analogspeicher eingespeicherten Analogwerte gehören, Insofern kann die Information, die beschreibt, welche Teilmenge der Analogwerte in dem Analogspeicher für die weitere Verarbeitung gespeichert wurde, durch die digitale Verarbeitungseinrichtung genutzt werden, um eine Lage der anhand der gespeicherten Analogwerte erkannten Merkmale zu bestimmen.

In einem weiteren bevorzugten Ausführungsbeispiel kann das Bildsensorsystem ausgelegt sein, um eine Position einer Licht-Linie (die beispielsweise durch einen LaserLichtschnitt eines dreidimensionalen Objekts entsteht) entlang einer jeweiligen Spalte des Bildsensors für verschiedene Spalten des Bildsensors zu bestimmen. Insofern kann beispielsweise auch eine Lage einer Linie, die schräg über einen Bildsensor verläuft, mit hoher Genauigkeit bestimmt werden, wobei in jeder der Spalten beispielsweise nur Analogwerte von solchen Bildpunkten (oder Bildzeilen) in dem Analogspeicher gespeichert und anschließend durch die digitale Verarbeitungseinrichtung ausgewertet werden, die auch zu der Linie gehören oder in einer Umgebung der Linie liegen. Somit können in verschiedenen Spalten verschiedene Zeilen-Bereiche gespeichert und ausgewertet werden.

Bei einem weiteren bevorzugten Ausführungsbeispiel kann das Bildsensorsystem ausgelegt sein, um in dem Analogspeicher selektiv Analogwerte zu speichern, die bei einer signifikanten Veränderung (beispielsweise einem Vorzeichenwechsel) eines Bildsensor-Analogsignals oder eines auf einem Bildsensor-Analogsignal basierenden Signals (beispielsweise eines auf einem Vergleich zu einem Bildsensor-Analogsignal von einem räumlich benachbarten Bildpunkt, oder auf einem Vergleich zu einem Bildsensor-Analogsignal des gleichen Bildpunkts zu einem früheren Zeitpunkt basierenden Analogsignals) vorliegen. Auf diese Weise können beispielsweise Veränderungen eines Bildinhalts, die sich aufgrund von verschiedenen Effekten ergeben, analysiert werden. Insbesondere können dann beispielsweise in dem Analogspeicher nur solche Analogwerte für die weitere Verarbeitung eingespeichert werden, die die Veränderungen charakterisieren, was wiederum eine besonders effiziente Auswertung (und Analog-zu-Digital-Wandlung) ermöglicht.

Bei einem bevorzugten Ausführungsbeispiel kann das Bildsensorsystem ausgelegt sein, um basierend auf den selektiv gespeicherten Analogwerten eine Auswertung einer Weißlicht-Interferometrie durchzuführen. Es hat sich nämlich gezeigt, dass bei einer Weißlicht-Interferometrie gerade Veränderungen eines Bildsensor-Analogsignals oder eines davon abgeleiteten Signals (also beispielsweise Veränderungen, die größer sind als ein vorgegebener Schwellwert) besondere Aussagekraft haben. Insofern ermöglicht das beschriebene Bildsensorsystem eine besonders effiziente Durchführung bzw. Auswertung einer Weißlicht-Interferometrie,

Ein weiteres Ausführungsbeispiel gemäß der Erfindung beschreibt ein Verfahren zum Auslesen eines Bildsensors. Das Verfahren umfasst ein paralleles Empfangen einer Mehrzahl von Bildsensor-Analogsignalen, die von dem Bildsensor erfasste Helligkeitswerte in analoger Form beschreiben (beispielsweise von einer Mehrzahl von Spaltenleitungen des Bildsensors). Das Verfahren umfasst ferner ein Auswählen, welche Teilmenge einer Mehrzahl von durch die Bildsensor-Analogsignale dargestellten oder auf den Bildsensor-Analogsignalen basierenden Analogwerte in einem Analogspeicher für eine weitere Verarbeitung gespeichert werden. Das Verfahren umfasst ferner eine Speicherung der ausgewählten Analogwerte in dem Analogspeicher. Das entsprechende Verfahren basiert auf denselben Überlegungen wie für die oben beschriebene Vorrichtung. Das Verfahren kann optional auch um alle Merkmale und Funktionalitäten der Ausleseanordnung und des Bildsensorsystems, wie es hierin beschrieben ist, ergänzt werden. Diese Merkmale können einzeln oder in Kombination bei dem Verfahren eingesetzt werden.

Ein weiteres Ausführungsbeispiel gemäß der Erfindung schafft eine Ausleseanordnung für einen Bildsensor. Die Ausleseanordnung ist ausgelegt, um parallel eine Mehrzahl von Bildsensor-Analogsignalen, die von dem Bildsensor erfasste Helligkeitswerte in analoger Form beschreiben, von einer Mehrzahl von Spaltenleitungen des Bildsensors zu empfangen. Die Ausleseanordnung ist beispielsweise ausgelegt, um (beispielsweise durch eine Ansteuerung des Bildsensors, um auszulesende Zeilen festzulegen, und/oder durch Ansteuerung eines Multiplexers, der festlegt, in welcher Speicherzelle des Analogspeichers ein Analogwert gespeichert werden soll) eine Zuordnung zwischen einer Bildspalte und Spalten eines Analogspeichers, in denen zu der Bildspalte zugehörige Analogwerte gespeichert werden, zu variieren, so dass zu einer Bildspalte gehörige Analogwerte in verschiedenen Speicherspalten des Analogspeichers abgespeichert werden. Durch das entsprechende Konzept kann beispielsweise ermöglicht werden, dass Analogwerte, die eine schräg über den Bildsensor verlaufende Linie beschreiben, in einem rechteckigen Speicherbereich des Analogspeichers abgespeichert werden und somit in effizienter Weise auswertbar und verarbeitbar sind. Im Übrigen ist das Abspeichern von zusammengehörigen Merkmalen in einem rechteckigen Speicherbereich des Analogspeichers typischerweise auch sehr Speicher-effizient, da somit beispielsweise in einem vergleichsweise kleinen Speicher Analogwerte, die zu verschiedenen Bereichen von Interesse gehören, abgelegt werden können. Selbst wenn beispielsweise in den verschiedenen Regionen von Interesse Linien in verschiedenen Richtungen verlaufen, können doch einfach handhabbare rechteckige Speicherbereiche des Analogspeichers verwendet werden, was Speicherplatz spart und ein Auslesen vereinfacht.

Bei einem weiteren bevorzugten Ausführungsbeispiel ist die Ausleseanordnung ausgelegt, um Analogwerte, die Bildpunkten zugeordnet sind, bei einem Einspeichern in den Analogspeicher umzuordnen. Somit können beispielsweise Analogwerte von Bildpunkten, deren Mittelpunkte entlang einer gebogenen oder gewinkelten Linie liegen, in einem linearen oder rechteckigen Bereich des Analogspeichers gespeichert werden. Beispielsweise können die entlang einer gebogenen oder gewinkelten Linie liegenden Bildpunkte, bzw. die dazu gehörigen Analogwerte, in einem fortlaufend adressierten Bereich des Analogspeichers abgelegt werden. Dies erleichtert ein Auslesen und eine weitere Verarbeitung und ist im Übrigen Speicher-effizient.

### Figurenkurzbeschreibung

Ausführungsbeispiele gemäß der vorliegenden Erfindung werden nachfolgend Bezug nehmend auf die beiliegenden Figuren näher erläutert.

Es zeigen:
- Fig. 1: ein Blockschaltbild einer Ausleseanordnung, gemäß einem Ausführungsbeispiel der vorliegenden Erfindung;
- Fig. 2: eine schematische Darstellung einer Architektur eines "Vision-SoC" (SichtSystem-auf-Chip) mit analoger Speichermatrix;
- Fig. 3: eine schematische Darstellung eines analogen Datenpfads, gemäß einem Ausführungsbeispiel der vorliegenden Erfindung;
- Fig. 4a: eine schematische Darstellung eines Speicher-Multiplexers, gemäß einem Ausführungsbeispiel der vorliegenden Erfindung;
- Fig. 4b: eine schematische Darstellung eines Speicher-Multiplexers, gemäß einem Ausführungsbeispiel der Erfindung;
- Fig. 5: eine schematische Darstellung einer Bildzeile (Pixelzelle) mit einem globalen Verschluss (Shutter);
- Fig. 6: eine schematische Darstellung einer Speicherzelle, gemäß einem Ausführungsbeispiel der vorliegenden Erfindung;
- Fig. 7a: eine schematische Darstellung einer Laserlichtschnitt-Anordnung;
- Fig. 7b: eine schematische Darstellung eines Verlaufs eines Grauwerts entlang einer Sensorspalte;
- Fig. 8a-8c: schematische Darstellungen von verschiedenen Varianten zur Bestimmung einer Koordinate x₀ eines Grauwerts entlang einer Sensorspalte;
- Fig. 9: eine schematische Darstellung eines Systems, gemäß einem Ausführungsbeispiel der vorliegenden Erfindung;
- Fig. 10: eine schematische Darstellung einer Auswertung bei Vorliegen einer horizontal verlaufenden Licht-Linie;
- Fig. 11: eine schematische Darstellung einer Auswertung bei Vorliegen einer im Wesentlichen horizontal verlaufenden Licht-Linie, die leicht geneigt nach rechts unten verläuft; und
- Fig. 12: eine schematische Darstellung einer Auswertung bei Vorliegen einer im Wesentlichen vertikal verlaufenden Licht-Linie, die etwas nach rechts-unten geneigt verläuft; und
- Fig. 13: ein Flussdiagramm eines Verfahrens gemäß einem Ausführungsbeispiel der vorliegenden Erfindung.

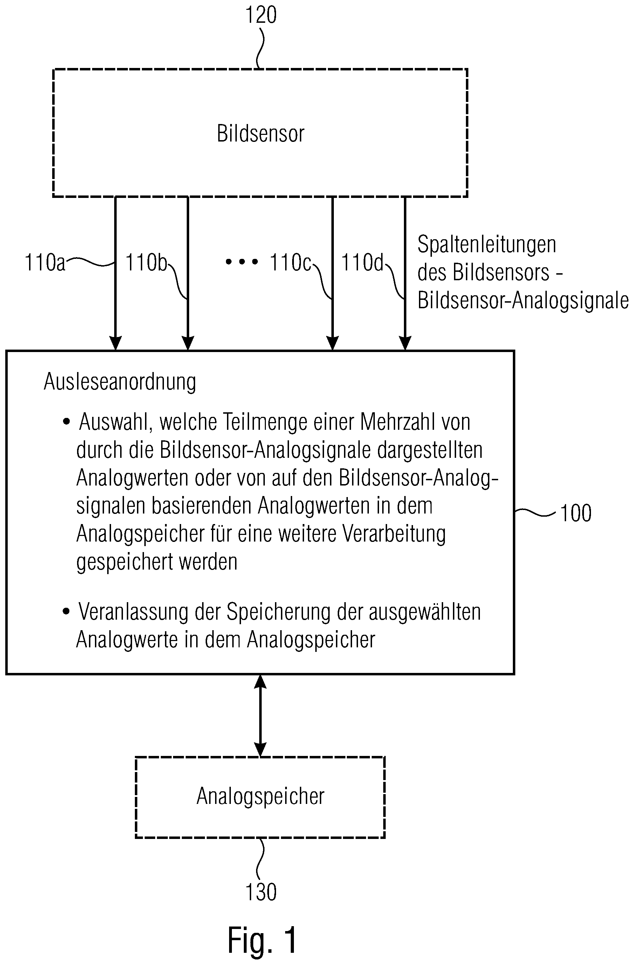

### 1. Ausleseanordnung gemäß Fig. 1

Fig. 1 zeigt eine schematische Darstellung einer Ausleseanordnung 100 gemäß einem Ausführungsbeispiel der vorliegenden Erfindung. Die Ausleseanordnung 100 ist beispielsweise ausgelegt, um parallel eine Mehrzahl von Bildsensor-Analogsignalen 110a bis 110b, die von einem Bildsensor 120 erfasste Helligkeitswerte in analoger Form beschreiben, von einer Mehrzahl von Spaltenleitungen des Bildsensors 120 zu empfangen. Die Ausleseanordnung 100 ist ferner ausgelegt, um auszuwählen, welche Teilmenge einer Mehrzahl von durch die Bildsensor-Analogsignale 110a bis 110d dargestellten oder auf den Bildsensor-Analogsignalen basierenden Analogwerten in einem Analogspeicher 130 für eine weitere Verarbeitung gespeichert werden. Die Ausleseanordnung 100 ist ausgelegt, um die Speicherung der ausgewählten Analogwerte in dem Analogspeicher 130 zu veranlassen oder um die ausgewählten Analogwerte in dem Analogspeicher 130 zu speichern. Die Ausleseanordnung 100 stellt somit beispielsweise eine Schnittstelle zwischen dem Bildsensor 120 und dem Analogspeicher 130 dar. Die Ausleseanordnung steuert beispielsweise den Analogspeicher 130 so an, dass nicht alle von dem Bildsensor 120 ausgegebenen Analogwerte in dem Analogspeicher 130 für eine weitere Verarbeitung gespeichert werden. Vielmehr trifft die Ausleseanordnung 100 eine Auswahl, welche der Analogwerte in dem Analogspeicher 130 gespeichert werden sollen, und welche der Analogwerte entweder erst gar nicht in den Analogspeicher 130 eingespeichert werden bzw. unmittelbar überschrieben werden (und somit auch nicht in dem Analogspeicher für eine weitere Verarbeitung gespeichert werden). Die Ausleseanordnung 100 kann beispielsweise ganz verschiedene Kriterien heranziehen, um zu entscheiden, welche der Analogwerte in dem Analogspeicher 130 für die weitere Verarbeitung gespeichert werden. Die Analogwerte können beispielsweise unmittelbar auf den Bildsensor-Analogsignalen 110a bis 110b basieren, oder die in den Analogspeicher 130 eingespeicherten Analogwerte können durch eine analoge Vorverarbeitung der Bildsensor-Analogsignale erzeugt werden. Beispielsweise können mehrere Bildsensor-Analogsignale (beispielsweise durch Summenbildung oder auch durch Differenzbildung) kombiniert werden oder es können Werte der Bildsensor-Analogsignale zu verschiedenen Zeitpunkten kombiniert werden, beispielsweise im Sinne einer Differenzbildung oder im Sinne einer Bestimmung einer Größe einer Veränderung über der Zeit. Die Ausleseanordnung 100 kann beispielsweise eine im Wesentlichen analoge Verarbeitung der Sensor-Analogsignale durchführen, um schließlich, beispielsweise anhand einer binären Schwellwertentscheidung, zu entscheiden, welche Analogwerte in dem Analogspeicher 130 gespeichert werden sollen.

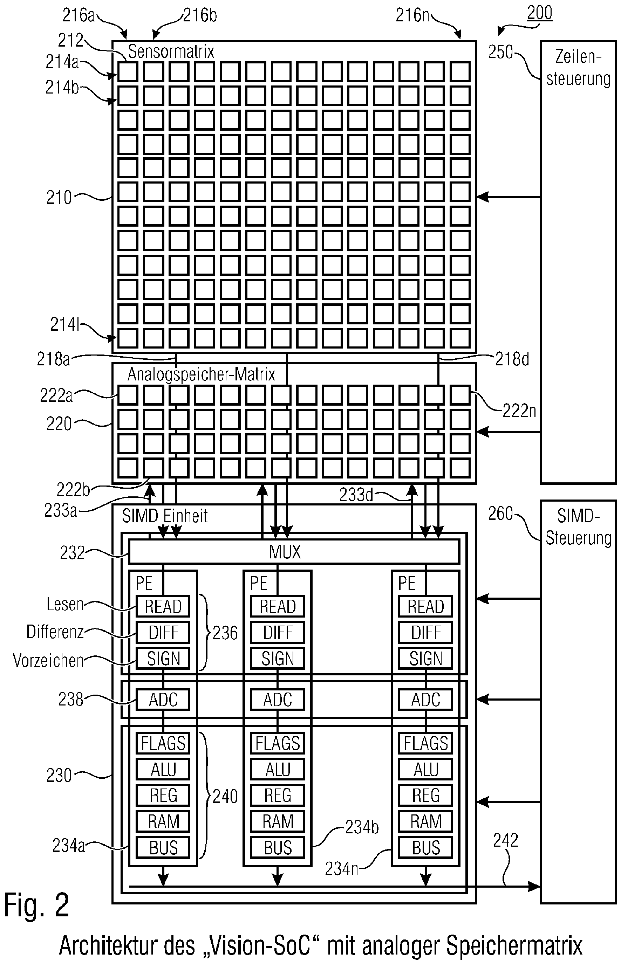

Es sei darauf hingewiesen, dass die Ausleseanordnung 100 gemäß der Fig. 1 um alle Merkmale ergänzt werden kann, die hierin beschrieben sind. Beispielsweise können die Merkmale alle Funktionalitäten, wie sie im Folgenden anhand der Fig. 2 bis 12 beschrieben werden, einzeln oder in Kombination in die Ausleseanordnung 100 aufgenommen werden.

### 2. Architektur gemäß den Figuren 2 bis 6

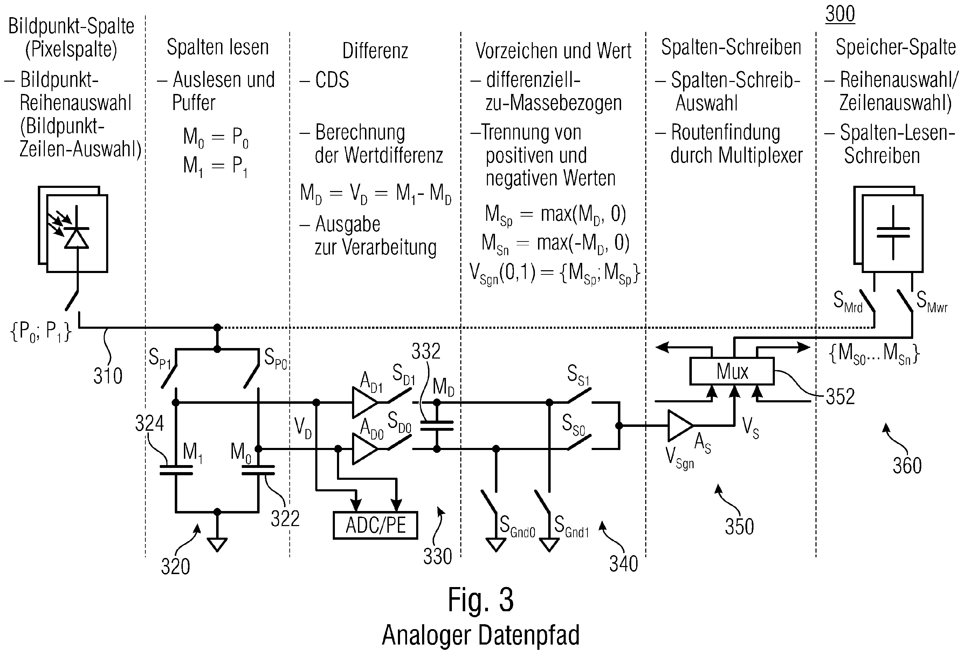

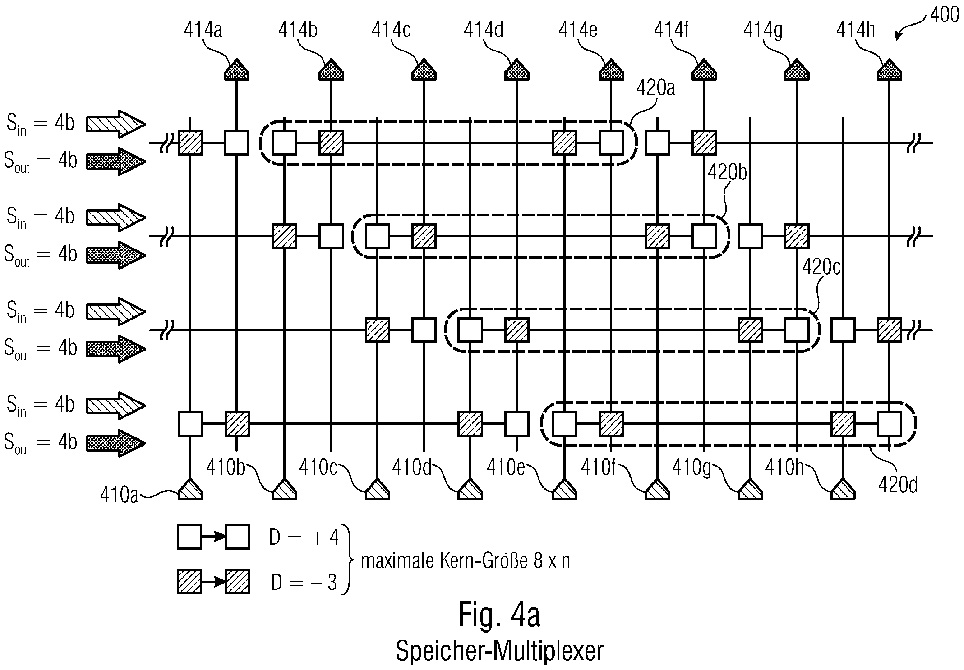

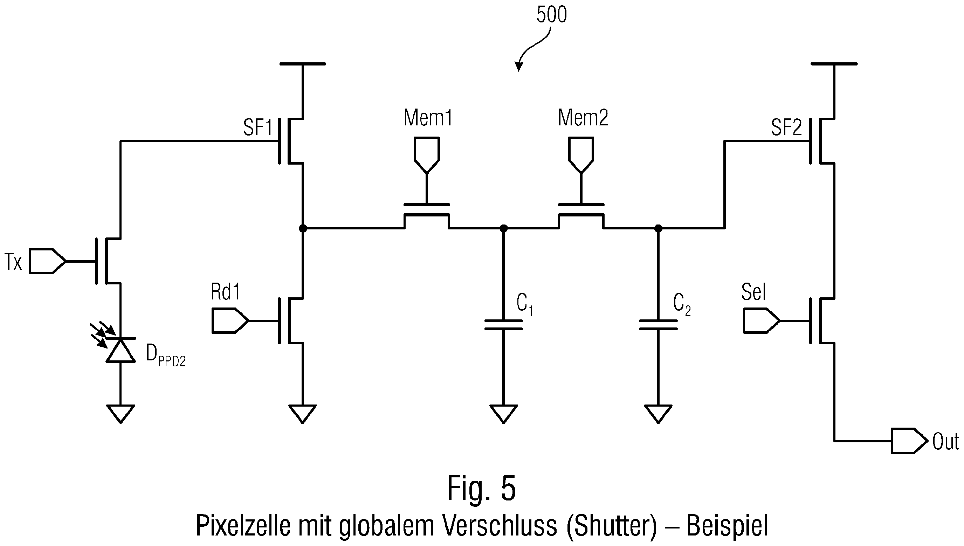

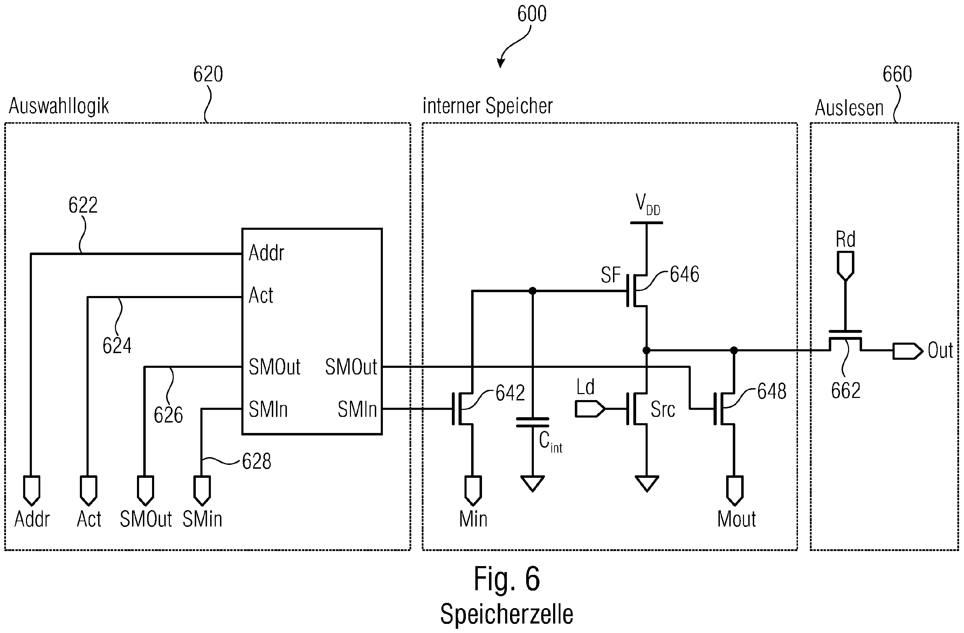

Fig. 2 zeigt eine schematische Darstellung einer Architektur eines "Vision-SoC" (also eines Sicht-System-auf-Chip) mit analoger Speichermatrix. Details im Hinblick auf einen möglichen analogen Datenpfad sind beispielsweise in der Fig. 3 gezeigt, und Details im Hinblick auf einen möglichen Speicher-Multiplexer sind in der Fig. 4a gezeigt. Fig. 5 zeigt im Übrigen Details im Hinblick auf eine mögliche Pixelzelle bzw. Bildpunktzelle und Fig. 6 zeigt Details im Hinblick auf eine mögliche Speicherzelle.

Die hier beschriebene Architektur basiert auf der Überlegung, dass es für bestimmte Anwendungen notwendig oder wünschenswert ist, dass von den Bildzellen bzw. Pixelzellen ausgelesene Grauwert-Daten noch vor der Analog-zu-Digital-Wandlung zwischengespeichert werden. Ein bekanntes Beispiel sind Bildsensoren mit Bildaufnahmeraten, die höher sind, als kontinuierlich von den integrierten oder extern angeschlossenen Analog-Digital-Wandlern digitalisiert werden können. Die Bildpunktwerte bzw. Pixelwerte müssen in manchen Fällen sehr schnell in einen unmittelbar angeschlossenen Analogspeicher geschrieben werden, aus dem sie nach Abschluss der Bildaufnahme langsam ausgelesen, verarbeitet, digitalisiert und ausgegeben werden können. Es wurde erkannt, dass sich mit diesem herkömmlichen Ansatz Bildwiederholraten bis in den Megahertzbereich erzielen lassen. Herkömmlicherweise muss sich jedoch der Speicher unmittelbar im Pixel bzw. im Bildpunkt befinden, was zu einem sehr geringen Füllfaktor führt, oder die Information muss von jedem Pixel bzw. Bildpunkt an den Rand der Sensormatrix geführt werden. Außerdem ist die Menge der auszugebenden Daten in solchen Fällen gleich, und es ist somit aufgrund der unveränderten Anforderungen an die Bandbreite der Schnittstelle der Flaschenhals (beispielsweise in Form der Schnittstelle) weiter vorhanden und ein kontinuierlicher Betrieb nicht möglich. Bei diesem Vorgehen ist außerdem aufgrund der komplexen Verdrahtung die Auflösung eingeschränkt. Eine Realisierung mittels dreidimensionaler Integration (3D-Integration) wird an dieser Stelle nicht betrachtet, da sie aus Kostengründen für viele Anwendungen nicht infrage kommt.

Im Folgenden werden Aspekte eines neuen Ansatzes bzw. der erfindungsgemäßen Lösung beschrieben.

Insbesondere sei darauf hingewiesen, dass Ausführungsbeispiele gemäß der Erfindung durch die unabhängigen Patentansprüche definiert sind, und dass vorteilhafte Weiterbildungen durch die abhängigen Patentansprüche definiert sind.

Im Folgenden werden Aspekte der vorliegenden Erfindung beschrieben, die für sich genommen eingesetzt werden können. Die im Folgenden beschriebenen Erfindungsaspekte können aber auch in Kombination mit den durch die Patentansprüche definierten Ausführungsbeispielen verwendet werden. In anderen Worten, die in den Patentansprüchen definierten Ausführungsbeispiele können um Merkmale und Funktionalitäten oder um Details ergänzt werden, wie sie hierin beschrieben sind, und zwar einzeln oder in Kombination.

Im Folgenden werden zunächst einige allgemeine Aspekte der erfindungsgemäßen Lösung beschrieben.

Im Unterschied zu gängigen Methoden der Bildpunkt-sequenziellen (Pixel-sequenziellen) Speicherung erfolgt in der neuartigen Architektur die Speicherung nicht kontinuierlich, sondern im Zusammenspiel mit einer Spalten-parallelen Verarbeitungseinheit, die auch als Prozessorelement "PE" bezeichnet ist.

in Fig. 2 ist eine mögliche Anordnung beispielhaft schematisch dargestellt.

Die Anordnung gemäß der Fig. 2 ist in ihrer Gesamtheit mit 200 bezeichnet. Die Anordnung 200 umfasst eine Sensormatrix 210, die beispielsweise eine Mehrzahl von Bildpunkten aufweisen kann. Ein Bildpunkt bzw. "einzelner Pixel" ist beispielhaft mit 212 bezeichnet. Die Sensormatrix 210, die auch als Bildsensor bezeichnet werden kann, umfasst eine Mehrzahl von Bildzeilen 214a bis 214f, wobei jede der Bildzeilen 214a bis 214I eine Mehrzahl von Bildspalten 216a bis 216n aufweisen kann. Die Sensormatrix liefert beispielsweise für jede Sensorspalte ein Bildsensor-Analogsignal 218a-218d, beispielsweise über eine zugehörige Spaltenleitung.

Die Anordnung 200 umfasst ferner eine Analogspeicher-Matrix 220 und eine sogenannte "SIMD-Einheit" 230. Die SIMD-Einheit 230 kann beispielsweise eine "Single-Instruction-Multiple-Data"-Einheit sein, also eine Einheit, die mit einem einzigen Befehl ("Single Instruction") mehrere Daten ("Multiple Data") verarbeitet.

Ferner umfasst die Anordnung 200 noch eine Zeilensteuerung 250, die beispielsweise mit der Sensormatrix 210 gekoppelt ist, und die beispielsweise ausgelegt sein kann, um ein Auslesen von Zeilen der Sensormatrix 210 zu ermöglichen. Die Zeilensteuerung 250 kann ferner auch mit der Analogspeicher-Matrix 220 gekoppelt sein, um ein Auslesen von Zeiten der Analogspeicher-Matrix 220 zu ermöglichen. Ferner umfasst die Anordnung 200 eine "SIMD-Steuerung" 260, die ausgelegt ist, um beispielsweise über einen Bus Steuerinstruktionen zu erhalten und um die "SIMD-Einheit" 230 entsprechend anzusteuern bzw. zu konfigurieren.

Die SIMD-Einheit 230 umfasst beispielsweise einen Multiplexer 232, der beispielsweise einerseits mit Spaltenleitungen der Sensormatrix 210 gekoppelt ist, um analoge Spaltenleitungssignale 218a-218d von der Sensormatrix 210 zu empfangen. Der Multiplexer 232 ist ferner, beispielsweise bidirektional (alternativ aber auch unidirektional) mit der Analogspeicher-Matrix 220 gekoppelt. Der Multiplexer 232 kann beispielsweise ausgelegt sein, um eine Gruppe von Spaltenleitungen der Sensormatrix 210 mit einer Gruppe von Spaltenleitungen der Analogspeicher-Matrix 220 zu verbinden, wobei die Zuordnung zwischen den Spaltenleitungen der Sensormatrix 210 und den Spaltenleitungen der Analogspeicher-Matrix 220 beispielsweise variabel einstellbar ist. So kann der Multiplexer 232 beispielsweise (in auswählbarer Weise) eine vorgegebene Gruppe von Spaltenleitungen der Sensormatrix 210 zeitweise mit einer ersten Gruppe von Spaltenleitungen der Analogspeicher-Matrix 220 und zeitweise mit einer zweiten Gruppe von Spaltenleitungen der Analogspeicher-Matrix 220 verbinden, wobei die zweite Gruppe von Spaltenleitungen sich von der ersten Gruppe von Spaltenleitungen unterscheidet.

Ferner kann beispielsweise jeder Spaltenleitung der Sensormatrix 210 (oder zumindest einer Teilmenge der Spaltenleitungen der Sensormatrix 210) jeweils ein Prozessorelement PE zugeordnet sein. Beispielsweise ist einer ersten Spaltenleitung (die hier beispielsweise zu einer Bildspalte 216a gehört) ein erstes Prozessorelement 234a zugeordnet. Einer zweiten Spaltenleitung, die beispielsweise zu der zweiten Bildspalte 216b gehört (die beispielsweise mit den Bildelementen der zweiten Bildspalte 216b gekoppelt ist) ist beispielsweise ein zweites Prozessorelement 234b zugeordnet. Einer n-ten Spaltenleitung, die beispielsweise zu der n-ten Bildspalte 216n gehört, kann beispielsweise ein n-tes Prozessorelement 234n zugeordnet sein.

Die Prozessorelemente 234a, 234b, 234c können beispielsweise im Wesentlichen gleichartig sein. Daher wird im Folgenden beispielsweise nur das Prozessorelement 234a beschrieben. Das Prozessorelement 234a umfasst beispielsweise eine analoge Verarbeitung 236, eine (optionale) Analog-zu-Digital-Wandlung 238 und eine (optionale) digitale Verarbeitung 240. Die analoge Verarbeitung kann beispielsweise eine Leseschaltung ("READ"), eine Differenzbildungsschaltung bzw. Differenzierschaltung "DIFF" und eine Vorzeichenbestimmungsschaltung bzw. Betragsbildungsschaltung "SIGN" umfassen. Ferner kann die analoge Verarbeitung 236 auch noch eine im Wesentlichen analoge Detektion umfassen, die beispielsweise durch eine analoge Kombination verschiedener Signalwerte und durch eine anschließende Schwellwertentscheidung feststellen kann, ob ein besonders charakteristischer Bildinhalt (z. B. ein durch eine Licht-Linie hervorgerufener Bildinhalt) vorliegt. Somit kann die analoge Signalverarbeitung 236 beispielsweise ausgelegt sein, um zu erkennen, wenn ein Verlauf eines zu einer jeweiligen Bildspalte gehörigen Bildsensor-Ausgangssignals über eine Mehrzahl von Bildzeilen hinweg einen Verlauf aufweist, der eine vorgegebene Bedingung erfüllt. Alternativ dazu kann die analoge Verarbeitung auch ausgelegt sein, um z. B. zu erkennen, wenn ein Bildpunkt in einer Spalte eine bestimmte Bedingung erfüllt, oder wenn eine Differenz zwischen zwei räumlich benachbarten Bildpunkten eine bestimmte Bedingung erfüllt, oder wenn eine Differenz zwischen Analogwerten eines Bildpunkts zu verschiedenen Zeitpunkten eine vorgegebene Bedingung erfüllt. Eine entsprechende Auswertung kann hierbei Spalten-individuell erfolgen, so dass für jede Bildspalte 216a bis 216n separat ausgewertet wird, zu welchem Zeitpunkt die entsprechende vorgegebene Bedingung erfüllt ist.

Die (optionale) digitale Verarbeitung 240 kann beispielsweise die analoge Verarbeitung 236 unterstützen oder konfigurieren. Die digitale Verarbeitung 240 kann beispielsweise eine arithmetisch-logische Einheit "ALU" umfassen, die auf Merker ("FLAGS") zugreifen kann bzw. die die Merker auch verändern kann. Ferner kann die arithmetisch-logische Einheit ALU beispielsweise auf Register REG lesend und/oder schreibend zugreifen. Die arithmetisch-logische Einheit ALU kann beispielsweise auch auf einen Speicher mit wahlfreiem Zugriff "RAM" zugreifen und kann über eine Bus-Schnittstelle "BUS" an einen Bus 242 angekoppelt sein. Somit kann die digitale Verarbeitung 240 beispielsweise die Funktion eines Mikroprozessors, bzw. zumindest eine Teilfunktion eines Mikroprozessors, erfüllen. Die digitale Verarbeitung 240 kann beispielsweise über den Analog-Digital-Wandler 238 mit der analogen Verarbeitung 236 gekoppelt sein, um beispielsweise eine durch die analoge Verarbeitung 236 vorverarbeitete Information zu erhalten.

Die Analog-zu-Digital-Wandlung 238 kann dabei beispielsweise mit vergleichsweiser geringer Genauigkeit arbeiten, die beispielsweise geringer ist, als eine beim Auslesen der Zeilen der Sensormatrix 210 verwendete Genauigkeit.

Die SIMD-Steuerung 260 kann beispielsweise ausgelegt sein, um die analoge Verarbeitung 236 und/oder die Analog-zu-Digital-Wandlung 238 und/oder die digitale Verarbeitung 240 zu konfigurieren. Beispielsweise kann die SIMD-Steuerung 260 Entscheidungsschwellen für die analoge Verarbeitung 236 festlegen oder ein Programm in die digitale Verarbeitung 240 laden. Im Übrigen kann die SIMD-Steuerung 260 auch von außen festlegen, welcher Bereich der Sensormatrix 210 in den Analogspeicher 220 übernommen werden soll. Dies kann beispielsweise Spalten-individuell festgelegt werden.

Insgesamt ist somit festzuhalten, dass die SIMD-Einheit beispielsweise im Zusammenwirken mit der SIMD-Steuerung 260 festlegt, basierend auf welchen Bildpunkten bzw. Pixel der Sensormatrix Analogwerte in der Analogspeicher-Matrix 220 abgelegt werden. Dabei kann eine Spalten-individuelle Auswertung von Spaltensignalen von der Sensormatrix die Entscheidung zumindest beeinflussen. Vorgaben können aber alternativ oder zusätzlich auch von der SIMD-Steuerung kommen. Die in die Analogspeicher-Matrix 220 eingespeicherten Analogwerte können beispielsweise identisch zu den auf den Spaltenleitungen der Sensormatrix 210 gelieferten Analogwerten sein, oder können beispielsweise durch die analoge Verarbeitung 230 vorverarbeitet sein. Die analoge Verarbeitung 236 kann dabei eine Differenzbildung und/oder eine Skalierung und/oder eine Betragsbildung und/oder eine andere analoge Vorverarbeitung vornehmen. Im Übrigen kann durch den Multiplexer 230 auch noch gesteuert werden, wo (in welcher Spalte) der Analogspeicher-Matrix ein Analogwert von einer vorgegebenen Bildspalte der Sensormatrix 210 abgelegt wird. Im Übrigen kann auch noch festgelegt werden, in welchen Zeilen die Analogspeicher-Matrix 220 Analogwerte, die auf den Spaltenleitungssignalen der Sensormatrix 210 basieren, in der Analogspeicher-Matrix 220 abgelegt werden.

Im Folgenden werden weitere (optionale) Aspekte im Hinblick auf die Anordnung 200 gemäß der Fig. 2 beschrieben.

Zu jeder Bildpunktspalte (bzw. Pixelspalte) der Sensormatrix gehört beispielsweise eine Prozessorelement-Spalte (z. B. eine der Prozessorelement-Spalten 234a, 234b, 234n). Beispielsweise dazwischen befindet sich eine Spalte der analogen Speichermatrix 220. Bei unterschiedlichen Breitenverhältnissen können auch mehrere Bildpunkte bzw. Pixel einer Prozessorelement-Spalte 234a, 234b, 234n bzw. einer Speicherspalte 222a, 222b, 222n zugeordnet sein. Damit ist jedoch keine vollständig parallele, sondern nur eine Teilserielle Verarbeitung möglich.

Eine Mindestfunktionalität des Prozessorelements PE besteht beispielsweise darin, die Speicherzellen in der analogen Speichermatrix 220 auszuwählen bzw. anzusteuern. Die Information, ob und auf welche Speicherzelle geschrieben wird, kann beispielsweise entweder aus einem Speicher des Prozessorelements kommen oder durch Auswertung der Pixeldaten (bzw. Bildpunktdaten) der Sensormatrix 210 gewonnen werden.

Im Folgenden wird ein Aufbau eines Analogteils eines Prozessorelements PE beschrieben. Das beschriebene Prozessorelement dient als Beispiel, und kann beispielsweise zur Bestimmung von auf den Bildsensor-Analogsignalen basierenden Analogwerten genutzt werden. Fig. 3 zeigt ein Beispiel eines analogen Datenpfads in Form einer schematischen Darstellung. In anderen Worten, in Fig. 3 ist beispielhaft eine prinzipielle Funktion des Analogteils eines Prozessorelements (grün hinterlegter Block in Fig. 2) zur Verarbeitung von Pixeldaten bzw. Bildpunktdaten dargestellt. In anderen Worten, der analoge Datenpfad 300 gemäß der Fig. 3 kann beispielsweise die Funktion des Multiplexers 232 sowie der analogen Verarbeitung 236 (und optional auch noch des Analog-zu-Digital-Wandlers 238) übernehmen.

Der analoge Datenpfad umfasst beispielsweise eine Bildpunktspalte bzw. Pixelspalte. Eine Bildpunktspalte umfasst typischerweise eine Mehrzahl von Bildpunkten, beispielsweise einen Bildpunkt pro Bildspalte. Die Bildpunktspalte umfasst ferner eine Bildpunkt-Reihenauswahl bzw. Bildpunkt-Zeilen-Auswahl, so dass es beispielsweise ermöglicht wird, über eine Spaltenleitung 310 einen Analogwert eines ausgewählten Bildpunkts der Bildpunktspalte auszugeben, wobei der Analogwert beispielsweise einen Helligkeitswert (oder einen mittleren Helligkeitswert) repräsentiert, wie er in einem bestimmten Zeitraum bei dem ausgewählten Bildpunkt vorlag. Analoge Signale bzw. Signalwerte von der Bildpunkt-Spalte (die beispielsweise durch Spannungen repräsentiert werden) sind hier beispielsweise mit P₀ und P, bezeichnet. Der analoge Datenpfad umfasst ferner eine Spaltenleseschaltung 320, die ausgelegt ist, um ein Auslesen eines Analogwerts von einem Bildpunkt (bzw. von einer Bildpunkt-Schaltung) zu ermöglichen, und um ferner eine Pufferung eines von einem ausgewählten Bildpunkt ausgelesenen Analogwerts zu ermöglichen. Beispielsweise kann die Spaltenleseschaltung 320 zwei Kapazitäten M₀,322 und M₁ ,324 aufweisen, wobei eine erste Kapazität M₀ ,322 über einen ersten Schalter S_{P0} mit der Spaltenleitung 310 koppelbar ist, und wobei die zweite Kapazität M₁ ,324 über einen zweiten Schalter S_{P1} mit der Spaltenleitung 310 koppelbar ist. Insofern können beispielsweise Kapazitäten M₀,322 und M₁ ,324 zu unterschiedlichen Zeiten mit der Spaltenleitung 310 gekoppelt werden und somit beispielsweise basierend auf Analogwerten von verschiedenen Bildpunkten aufgeladen werden. Alternativ können die Kapazitäten auch basierend auf Analogwerten desselben Bildpunkts zu verschiedenen Zeitpunkten aufgeladen werden. Der analoge Datenpfad 300 umfasst ferner eine Differenzschaltung bzw. Differenzbildungsstufe 330. Die Differenzbildungsstufe kann beispielsweise ausgelegt sein, um in analoger Weise eine Wertdifferenz zu bestimmen. Beispielsweise kann eine über dem ersten Kondensator M₀ ,322 anliegende Spannung durch einen ersten Pufferverstärker A_{D0,} dessen Eingang mit den ersten Kondensator M₀ ,322 gekoppelt ist, gepuffert werden. Ferner kann eine an dem zweiten Kondensator M₁ ,324 anliegende Spannung durch einen zweiten Pufferverstärker A_{D1}, dessen Eingang mit dem zweiten Kondensator M₁ ,324 gekoppelt ist, gepuffert werden. Ein Ausgang des ersten Pufferverstärkers A_{D0} ist beispielsweise über einen ersten Schalter S_{D0} mit einem ersten Anschluss eines weiteren Kondensators M_{D} ,332 gekoppelt. Ein Ausgang des zweiten Pufferverstärkers A_{D1} ist beispielsweise über einen Schalter S_{D1} mit einem zweiten Anschluss des weiteren Kondensators M_{D} ,332 gekoppelt. Werden somit beispielsweise die Schalter S_{D0}, S_{D1} gleichzeitig geschlossen, so wird der weitere Kondensator M_{D} ,322 beispielsweise auf eine Spannung aufgeladen, die gleich einer Differenz der an dem ersten Kondensator M₀ ,322 und an dem zweiten Kondensator M₁ ,322 anliegenden Spannung ist. Ein Vorzeichen der Spannung an dem Kondensator M_{D} ,332 hängt davon ab, ob die Spannung an dem Kondensator M₀ ,322 größer oder kleiner ist als die Spannung an dem Kondensator M₁,324. Insofern kann die Differenzbildungsstufe 330 insgesamt eine Spannung bereitstellen, die die Differenz zweier über die Spaltenleitung 310 gelieferter Analogwerte von dem Bildsensor darstellt. Die an dem Kondensator M_{D} anliegende Spannung kann beispielsweise eine Differenz der Analogwerte, die von den Bildpunkten der gleichen Bildspalte in unterschiedlichen Bildzeilen geliefert wird, darstellen.

Die Differenzbildungsstufe kann somit eine Berechnung der Wertdifferenz gemäß M_{D} = V_{D} = M₁ - M₀ vornehmen (wobei M_{D}, M₁ und M₀ hier die Spannungen an den jeweiligen Kondensatoren 332, 324, 322 bezeichnen) und die entsprechende Wertdifferenz für eine weitere Verarbeitung ausgeben. M_{D} bezeichnet hierbei die Spannung über der Kapazität M₀, M₀ bezeichnet die Spannung über der Kapazität M₀, 322 und M₁ bezeichnet die Spannung über der Kapazität M₁, 324. Eine vorverarbeitetes Signal ist hier beispielsweise mit V_{sgn} bezeichnet.

Die an den Kondensatoren M₀ und M₁ anliegenden Spannungen können im Übrigen auch einer Analog-zu-Digital-Wandlung (beispielsweise durch den Analog-zu-Digital-Wandler 238) zugeführt werden, so dass die an den Kapazitäten M₀, 322 und M₁ , 324 anliegenden Spannungen auch durch die digitale Verarbeitung 240 des Prozessorelements 234a verarbeitet werden können.

Der analoge Datenpfad 300 umfasst ferner eine Vorzeichen-Wert-Bestimmungsstufe 340, die ausgelegt ist, um Vorzeichen und/oder den Wert der an dem Kondensator 332 anliegenden Spannung (bzw. allgemein der durch die Differenzbildungsstufe 330 gelieferten Spannung) zu bestimmen. Insbesondere liefert die Vorzeichen- und Wert-Bestimmungsstufe 340 ein Signal, das den Betrag der durch die Stufe 330 gelieferten Spannung beschreibt, sowie ein weiteres Signal, das ein Vorzeichen der durch die Stufe 330 gelieferten Spannung beschreibt. Das Vorzeichen der durch die Stufe 330 gelieferten Spannung (beispielsweise der Spannung über dem Kondensator 332) kann durch einen einfachen Schwellwertvergleich bestimmt werden. Im Übrigen kann die beispielsweise über der Kapazität 332 als differenzielles Signal anliegende Spannung in ein Massebezogenes Signal umgewandelt werden, indem beispielsweise der negativere Anschluss der Kapazität 332 mit der Masse verbunden wird und der positivere Anschluss der Kapazität 332 mit dem Ausgang verbunden wird. Ist beispielsweise der erste Anschluss (untere Anschluss) der Kapazität 332 negativer als der zweite Anschluss (obere Anschluss), so können der Schalter S_{Gnd0} und der Schalter S_{S1} geschlossen werden. Damit liegt an einem Ausgang der Stufe 340 eine bezogen auf das Bezugspotenzial (bzw. die Masse) positive Spannung an. Ist hingegen der erste Anschluss (untere Anschluss) der Kapazität 332 positiver als der zweite Anschluss (oberer Anschluss) der Kapazität 332, so kann der zweite Anschluss (obere Anschluss) über den Schalter S_{Gnd1} mit dem Bezugspotenzial (Masse) verbunden werden, und der erste (untere Anschluss) der Kapazität 332 kann über den Schalter S_{S0} mit dem Ausgang der Stufe 340 verbunden werden. Ein entsprechendes Vorzeichensignal, das ebenfalls von der Stufe 340 geliefert wird, kann beispielsweise die Kapazität der Kondensatorspannung anzeigen, und kann separat (beispielsweise in einem digitalen Speicher) gespeichert werden.

Der analoge Datenpfad 300 umfasst ferner eine Spalten-Schreibschaltung 350, die ausgelegt ist, um zu entscheiden, in welche Spalte der analogen Speichermatrix das Ausgangssignal der Stufe 340 geschrieben werden soll. Die Spalten-Schreibschaltung 350 kann beispielsweise einen Multiplexer 352 aufweisen und ausgelegt sein, um eine geeignete Route durch den Multiplexer 352 zu finden. Zwischen den Ausgang der Stufe 340 und einem Eingang des Multiplexers 352 kann beispielsweise ein weiterer Pufferverstärker As geschaltet sein. Der Pufferverstärker ist beispielsweise über die Schalter Sso und S_{S1} mit einem der Anschlüsse der Kapazität 332 koppelbar, so dass der Eingang des Pufferverstärkers A_{S} beispielsweise jeweils mit dem positiveren der Anschlüsse des Kondensators 332 verbunden wird. Dadurch kann beispielsweise an den Pufferverstärker A_{S} jeweils eine in Bezug auf das Massepotenzial positive Spannung angelegt werden, wie dies vorher im Hinblick auf die Stufe 340 beschrieben wurde. Der Multiplexer 352 kann dann beispielsweise anhand eines entsprechenden Steuersignals auswählen, an welche der Speicherspalten das an dem Ausgang des Pufferverstärkers As anliegende Signal angelegt bzw. eingespeichert werden soll. Ausgänge des Multiplexers 352 sind somit mit verschiedenen der Speicherspalten verbunden, wobei eine der Speicherspalten mit 360 bezeichnet ist. Die Speicherspalte weist beispielsweise eine Reihenauswahl bzw. Zeilen-auswahl auf, so dass in jeder der Speicherspalten eine Reihe bzw. Zeile ausgewählt werden kann, auf die durch einen Schreibzugriff bzw. einen Lesezugriff zugegriffen wird. Die Speicherspalten weisen auch Steueranschlüsse für ein Spaltenlesen bzw. für ein Spaltenschreiben auf.

Diesbezüglich sei darauf hingewiesen, dass beispielsweise zu einem vorgegebenen Zeitpunkt in verschiedenen Speicherspalten verschiedene Speicherzeilen zum Lesen bzw. Schreiben ausgewählt sein können. Die Prozessorelemente der einzelnen Spalten können nämlich beispielsweise individuell festlegen, in welche Zeile der Analogspeicher-Matrix ein aktueller Wert geschrieben werden soll.

Im Übrigen sei darauf hingewiesen, dass ein aus der Speicherspalte ausgelesener Wert optional auch beispielsweise zu einer Spaltenleitung zurückgekoppelt werden kann und somit beispielsweise in eine der Kapazitäten 322, 324 eingespeichert werden kann. Eine derartige Rückkopplung kann beispielsweise sinnvoll sein, wenn Differenzen zwischen nacheinander ausgelesenen Werten gebildet werden sollen.

Im Übrigen sei darauf hingewiesen, dass die Ansteuerung der Stufen 320, 330, 340, 350, 360 beispielsweise durch die digitale Verarbeitung 240 und/oder durch die SIMD-Steuerung 260 erfolgen kann. Ferner sei darauf hingewiesen, dass mit Knoten des analogen Datenpfads 300 auch noch eine oder mehrere Schwellwertentscheider gekoppelt sein können, die auswerten können, ob bestimmte Bedingungen durch die Analogsignale erfüllt werden. Basierend auf dem Vorliegen einer bestimmten Bedingung kann beispielsweise entschieden werden, ob ein Analogwert in eine Speicherspalte eingespeichert werden soll bzw. in welcher Zeile einer Speicherspalte der Analogwert eingespeichert werden soll bzw. in welcher Spalte der Analogspeicher-Matrix ein Analogwert eingespeichert werden soll.

Im Folgenden wird die Funktionsweise des Analogteils bzw. des analogen Datenpfads kurz erläutert.

Sollten z. B. Bildpunktdaten bzw. Pixeldaten, wie beispielsweise aus der in Abbildung 5 dargestellten Bildpunktzelle bzw. Pixelzelle, mittels CDS korrigiert, oder zwei aufeinanderfolgende oder räumlich benachbarte Bildpunktwerte bzw. Pixelwerte voneinander subtrahiert werden, so werden diese Daten P₀ und P₁ nacheinander über eine Spaltenleitung (z. B. über dieselbe Spaltenleitung) ausgegeben. Durch die Ansteuerung der Schalter S_{P0} und S_{P1} erfolgt eine Speicherung der Werte M₀ und M₁ auf den beiden beispielhaft als Kondensatoren 322, 324 ausgeführten Speicherzellen. Im Anschluss daran kann der Differenzwert V_{D} weiterverarbeitet werden, z. B. durch eine Analog-Digital-Wandlung (A/D-Wandlung) mit vollständiger oder reduzierter Auflösung oder eine andere Bewertung des Analogwerts. Das bei dieser Analyse entstehende Ergebnis oder ein aus dem Speicher des Prozessorelements PE entnommener Wert können dafür genutzt werden, festzulegen, ob und mit welchen Vorzeichen der analoge Wert Vo nach der Aktivierung von S_{D0} und S_{D1} durch Treiben auf M₀ und M₁ mittels A_{D0} und A_{D1} als Speicherwert M_{D} abgelegt werden soll. Mittels der Schalter S_{Gnd0}, S_{Gnd1}, S_{S0} und S_{S1} der Vorzeichenschaltung kann bestimmt werden, ob das Vorzeichen von M_{D} invertiert werden soll (S_{Gnd1} = Sso = 1 und S_{Gnd0} = S_{S1} = 0) oder nicht (S_{Gnd1} = S_{S0} = 0 und S_{Gnd0} = S_{S1} = 1), woraus sich ein neuer Vorzeichen-behafteter, Null-bezogener Wert V_{Sgn} ergibt. Der Treiber A_{S} sorgt dafür, dass für negative Werte V_{Sgn} der Ausgangswert V_{S} auf null gesetzt wird. Werden beide Werte in zwei Speicherzellen abgelegt oder mittels einer nicht-dargestellten Zusatzschaltung eine Summe ermittelt und diese abgelegt, ist es z. B. möglich, analog den Absolutwert einer Differenz zu bestimmen und zu speichern. Es sei allerdings darauf hingewiesen, dass die in diesem Abschnitt beschriebene Verarbeitung optional ist, und dass auch nur einzelne der Verarbeitungsschritte vorhanden sein können.

Im Folgenden wird erläutert, wie Spalten der Speichermatrix ausgewählt werden können. Die Auswahl von Spalten der Speichermatrix sowie Details diesbezüglich sind allerdings als optional anzusehen.

Die Zuordnung der Zielspalte der Speichermatrix erfolgt beispielsweise in einem Multiplexer (Mux), der es z. B. ermöglicht, Spalten zu vertauschen. Beispielsweise kann die Zuordnung durch den Multiplexer 232 oder durch den Multiplexer 352 erfolgen. Der Multiplexer ist optional und kann beispielsweise verwendet werden, um eine Zuordnung zwischen einer Bildspalte und Spalten des Analogspeichers, in denen zu der Bildspalte gehörige Analogwerte gespeichert oder aus denen sie in der Sensormatrix gelesen werden, zu variieren. Der Multiplexer kann optional auch verändert werden. Eine mögliche Realisierung für den Multiplexer ist in der Fig. 4a beispielhaft dargestellt.

Fig. 4a zeigt eine schematische Darstellung eines Multiplexers 400, der beispielsweise die Aufgabe des Multiplexers 232 oder die Aufgabe des Multiplexers 352 übernehmen kann. Der Multiplexer weist beispielsweise eine Mehrzahl von Multiplexer-Eingangsleitungen 410a bis 410h auf. Der Multiplexer weist ferner eine Mehrzahl von Ausgangsleitungen 414a bis 414h auf. Die verschiedenen Eingangsleitungen können beispielsweise unterschiedlichen Prozessorelementen 234a bis 234n zugeordnet sein. Die Ausgangsleitungen 414a bis 414h können beispielsweise unterschiedlichen Speicherspalten (bzw. Spaltenleitungen) der Analogspeicher-Matrix 220 zugeordnet sein.

Der Multiplexer umfasst ferner eine Mehrzahl von Verbindungsleitungen bzw. Verbindungsstrukturen 420a, 420b, 420c, 420d, die beispielsweise jeweils mit einer Mehrzahl von Spalten verbindbar sind, und die zueinander versetzt sind, so dass verschiedene der Verbindungsstrukturen 420a bis 420d mit verschiedenen Sätzen von Eingangsleitungen und mit verschiedenen Sätzen von Ausgangsleitungen verbindbar sind, beispielsweise ist die erste Verbindungsstruktur 420a mit den Eingangsleitungen 410b bis 410e und den Ausgangsleitungen 414b bis 414e verbindbar. Die zweite Verbindungsstruktur 420b ist mit den Eingangsleitungen 410c bis 410f und mit den Ausgangsleitungen 414c bis 414f verbindbar. In ähnlicher Weise ist die dritte Verbindungsleitung 420c mit den Eingangsleitungen 410d bis 410g und mit den Ausgangsleitungen 414d bis 414g verbindbar. Die vierte Verbindungsleitung 420d ist mit den Eingangsleitungen 410e bis 410h und mit den Ausgangsleitungen 414e bis 414h verbindbar. Somit ist beispielsweise über die erste Verbindungsstruktur 420a eine der Eingangsleitungen 410b bis 410e mit einer der Ausgangsleitungen 414b bis 414e verbindbar, indem beispielsweise die Verbindungsleitung 420 mit einer der genannten Eingangsleitungen und mit einer der genannten Ausgangsleitungen verbunden wird. Die Verbindungsleitung 420a ist somit beispielsweise nutzbar, um die Verbindungsleitung 410b mit der Ausgangsleitung 414e zu verbinden. Genauso gut kann die Verbindungsleitung 420a aber auch verwendet werden, um die Eingangsleitung 410e mit der Ausgangsleitung 414b zu verbinden.

Jede der Verbindungsleitungen ist somit beispielsweise nutzbar, um eine Eingangsleitung mit einer Ausgangsleitung zu verbinden, die einen kleineren Index hat als die Eingangsleitung oder um die Eingangsleitung mit einer der Ausgangsleitungen zu verbinden, die einen größeren Index hat als die Eingangsleitung (im Bild gesprochen, weiter rechts liegt als die Eingangsleitung). Die Verbindungsleitung kann aber auch genutzt werden, um eine Eingangsleitung mit einer Ausgangsleitung zu verbinden, die den gleichen Index hat. Diesbezüglich sei angemerkt, dass eine Verbindungsleitung (z. B. Verbindungsleitung 420a) mit den zugehörigen Eingangsleitungen (beispielsweise mit den Eingangsleitungen 410b bis 410e) durch Schalter verbindbar ist, die beispielsweise an Kreuzungspunkten zwischen der Eingangsleitung und der jeweiligen Verbindungsleitung angeordnet sind. Eine Verbindungsleitung (z. B. die Verbindungsleitung 420a) ist mit den zugehörigen Ausgangsleitungen (beispielsweise den Ausgangsleitungen 414b bis 414e) ebenfalls über Schalter verbindbar, die beispielsweise an den Kreuzungspunkten zwischen den Verbindungsleitungen und den Ausgangsleitungen angeordnet sind.

Eine Länge der Verbindungsleitungen 420a bis 420d legt dabei fest, um wie viele Spaltenpositionen eine Eingangsleitung gegenüber einer durch eine Verbindungsleitung damit gekoppelten Ausgangsleitung verschoben werden kann.

Die Funktion des Speichermultiplexers gemäß der Fig. 4a wird im Folgenden noch einmal allgemein beschrieben. Eingangssignale aus den Spalten (z. B. von den Prozessor-Elementen PE) werden von unten zugeführt, z. B. über blau markierte Eingangsleitungen 410a bis 410h. Die Ausgangssignale werden beispielsweise nach oben ebenfalls spaltenweise wieder ausgegeben (z. B. über die Ausgangsleitungen 414a bis 414h). Horizontal werden Leitungen geführt (z. B. die Verbindungsleitungen 410a bis 410b), mittels derer die Eingangsleitungen und Ausgangsleitungen verbunden werden können. Dies geschieht beispielsweise durch Schalter, die in Fig. 4a als Quadrate auf den Kreuzungspunkten dargestellt sind. Die Schalter können z. B. wie dargestellt zeilenweise gesetzt werden. Die Anzahl der in jeder Verbindungszeile erforderlichen Schaiter-Steuer-Signale für die Verknüpfung der horizontalen Verbindungen (z. B. der Leitungen 420a bis 420d) mit den Eingangsleitungen (Sin, 410a bis 410h) und Ausgangsleitungen Sₒᵤₜ (z. B. 414a bis 414h) ergibt sich aus der Länge der zusammenhängenden Stücke (z. B. grau umrandet) bzw. den horizontalen Abstand der Unterbrechungen (bzw. der Länge der Verbindungsleitungen 420a bis 420d). Im vorliegenden Fall beträgt die Länge eines solchen Segments und damit die Anzahl der Paare pro Segment vier in jeder Zeile. Die Unterbrechungen und damit Verbindungen können stufenweise angeordnet werden, jedoch sind auch andere Anordnungen denkbar. Auch ist es möglich, mehr und längere Segmente zu wählen, was jedoch zu einer größeren Anzahl von Steuerleitungen pro Zeile führt. Farblich bzw. durch Schraffur sind in dem Beispiel gemäß der Fig. 4a die zwei maximalen Reichweiten der Verbindungen mit D = +3 (grün bzw. nicht schraffiert) und D = -3 (orange bzw. schraffiert) angegeben, woraus sich eine gesamte Reichweite und damit maximale erzielbare Blockgröße für Filtermatrizen von acht ergibt.

Soll die Möglichkeit zum Rücklesen während der Speicherung bestehen, verdoppelt sich die Anzahl der Pfade durch den Multiplexer. Ein Rücklesen kann erforderlich oder hilfreich sein, wenn in jeder Speicherzelle ein Treiber verwendet wird, dessen Streuung ("Mismatch") mittels Regelung beim Einspeichern (sogenannte Speicherung mit geschlossener Schleife bzw. "Closed-Loop-Speicherung") korrigiert werden soll.

Zusammenfassend ist somit festzuhalten, dass es der Multiplexer erlaubt, Analogwerte von einer vorgegebenen Spalte des Bildsensors in verschiedene Spalten der Analogspeicher-Matrix zu übertragen oder auch Analogwerte von verschiedenen Spalten des Bildsensors in eine vorgegebene Spalte der Analogspeicher-Matrix zu übertragen. Im Übrigen ist es auch möglich, dass durch entsprechende Ansteuerung des Multiplexers und durch entsprechende Skalierung von Analogwerten eine Filterung (z. B. eine räumliche Filterung) erzielt werden kann, indem beispielsweise Analogwerte von verschiedenen Bildpunkten in einer gemeinsamen Speicherzelle der analogen Speichermatrix gewichtet kombiniert werden. Durch die gewichtete Kombination von Analogwerten kann somit eine Filterung gemäß einer "Filtermatrix" erreicht werden.

Im Folgenden werden Details im Hinblick auf eine Adressierung und eine Speicherung beschrieben. Es sei allerdings darauf hingewiesen, dass die im Folgenden beschriebenen Details als optional anzusehen sind.

Bei einer Speicherung sind beispielsweise die Spaltenausgänge 414a bis 414h des Multiplexers 400 mit den Eingängen der Speichermatrix verbunden. Außerdem ist es in manchen Fällen gewünscht oder erforderlich, aus den Prozessorelementen PE eine Zuordnung einer Zeile vorzunehmen. Für diese Auswahl zur Speicherung gibt es verschiedene Möglichkeiten. Denkbar sind beispielsweise programmierbare Schieberegister oder Adressdecoder, mittels derer eine Zeile für die Speicherung ausgewählt wird. Beispielhaft ist in Fig. 6 eine Speicherzelle 600 mit einem Adressdecoder 620 abgebildet. Ein schreibender Zugriff erfolgt, indem auf einem Adressbus 622 eine Adresse (Addr) eingestellt und mittels eines Aktivierungssignals 624 (Act) eine Verbindung zwischen SOut bzw. Sln und den Schaltertransistoren (Sel1 bzw. Sel2) aktiviert wird. Das Setzen einer Spannung auf dem Speicherkondensator Cint erfolgt beispielsweise über den Analogeingang Min und das Rücklesen der sich durch den Source-Folger SF ergebende Spannung über den Analogausgang Mout. Denkbar ist auch eine Variante, bei der kein interner Stomquellentransistor Src verwendet wird, sondern stattdessen die gleiche externe Stromquelle für alle Speicher-Source-Folger. Das eigentliche Auslesen des internen Zustands wird durch eine zeilenweise Ansteuerung gleich der zum Auslesen der Bildpunktzellen bzw. Pixelzellen erreicht.

In anderen Worten, das zu einer Spalte des Bildsensors gehörige Prozessorelement PE kann beispielsweise zu einer einer Spalte der Analogspeicher-Matrix zugeordneten Auswahllogik 620 eine Adressinformation 622 liefern, die angibt, auf welche Zeile der jeweiligen Spalte der Analogspeicher-Matrix zugegriffen werden soll. Das entsprechende Prozessorelement kann im Übrigen auch ein Aktivierungssignal 624 liefern, um einen Speicherzugriff zu signalisieren. Ferner können weitere Steuersignale 626, 628 von dem Prozessorelement geliefert werden, die beispielsweise angeben, ob ein Schreibzugriff auf die durch die Adressinformation 622 ausgewählte Speicherzelle erfolgen soll, oder ob ein Lesezugriff auf die durch die Adressinformation 622 ausgewählte Speicherzelle erfolgen soll. Im Übrigen kann auch ein Schreib-Lese-Zugriff erfolgen, bei dem sowohl ein Schreibsignal (z. B. Min) an die Speicherzelle geliefert wird als auch ein Lesesignal (z. B. Mout) von der Speicherzelle zurückgelesen wird, beispielsweise um ein präzises Einspeichern unter Verwendung einer Rückkopplung zu ermöglichen. Das Schreibsignal Min kann beispielsweise von einem der Ausgänge 414a bis 414h eines Multiplexers geliefert werden. Falls kein Multiplexer vorhanden ist, kann aber auch beispielsweise das Signal Vs als Schreibsignal Min angelegt werden. Die Auswahllogik 620 sorgt dann dafür, dass in der jeweiligen Spalte, zu der die Auswahllogik 620 gehört, die richtige Zeile aktiviert wird. Bei einem Schreiben wird beispielsweise in der durch die Adressinformation 622 ausgewählten Zeile der Transistor 642 aktiviert, so dass beispielsweise die Kapazität Cint in der ausgewählten Speicherzelle mit der Spaltenleitung der Analogspeicher-Matrix verbunden wird. Soll eine bestimmte Speicherzelle ausgelesen werden, wird diese wiederum durch eine geeignete Adressinformation 622 ausgewählt, und es wird ansprechend auf ein entsprechendes Steuersignal der zugehörige Transistor 648 in einen leitenden Zustand versetzt, so dass ein Senkenanschluss (Source-Anschluss) des Source-Folger-Transistors 646 mit der entsprechenden Spaltenleitung (bzw. Auslese-Spaltenleitung) der Analogspeicher-Matrix verbunden wird.

Diesbezüglich sei ferner noch angemerkt, dass hier zunächst ein Einschreibvorgang und ein Auslesevorgang beschrieben wurden, bei denen in jeder Spalte der Analogspeicher-Matrix eine Zeile ausgewählt werden kann. Zu diesem Zweck weist beispielsweise jede Speicherspalte der Analogspeicher-Matrix eine zugehörige Auswahllogik auf, die Spalten-individuell eine Zeile der Analogspeicher-Matrix auswählt. Die Steuerung dieser Auswahllogik erfolgt bevorzugt durch ein zugeordnetes Prozessorelement, wobei die verschiedenen Prozessorelemente, die den verschiedenen Spalten des Bildsensors zugeordnet sind, zu einem Zeitpunkt verschiedene Zeilen der Analogspeicher-Matrix auswählen können. Somit kann in einem Verarbeitungsschritt (oder beispielsweise in einem Taktzyklus) eine erste Zeile einer ersten Spalte der Analogspeicher-Matrix beschrieben werden und eine zweite Zeile einer zweiten Spalte, wobei sich die zweite Zeile von der ersten Zeile unterscheidet.

Allerdings kann die Analogspeicher-Matrix auch in einer konventionellen Weise ausgelesen werden, so dass beispielsweise in einem Ausleseschritt in allen Spalten die gleiche Zeile ausgelesen wird. Dies kann beispielsweise durch eine Ausleseschaltung 660 erfolgen, wobei beispielsweise Auslesetransistoren 662 einer ganzen Speicherzeile der Analogspeicher-Matrix gleichzeitig (beispielsweise durch ein gemeinsames Auslesesignal) aktiviert werden können. Somit können beispielsweise alle Spalten (oder zumindest ein Spaltenbereich, der eine Mehrzahl von Spalten umfasst) gleichzeitig ausgelesen werden, was eine effiziente Übertragung der ausgelesenen Daten zu einer digitalen Weiterverarbeitung (nach einer entsprechenden Analog-zu-Digital-Wandlung) ermöglicht.

Zusammenfassend ist somit festzuhalten, dass durch entsprechenden Auswahllogiken zu beschreibende Zeilen bzw. auszulesende Zeilen Spalten-individuell ausgewählt werden können, wobei die Auswahl beispielsweise durch die parallel arbeitenden Prozessorelemente erfolgt. Die Analogspeicher-Matrix kann aber auch in einer anderen Weise, bevorzugt aber auch zeilenweise, ausgelesen werden, beispielsweise um Daten für eine weitere digitale Verarbeitung bereitzustellen. Das zeilenweise Auslesen kann beispielsweise durch die Zeilensteuerung 250 gesteuert werden.

Im Folgenden werden noch Details im Hinblick auf einen Zeitpunkt eines Zugriffs beschrieben, wobei diese Details als optional anzusehen sind.

Für die Schreiboperationen auf den Speicher gibt es verschiedene Möglichkeiten. So kann dies beispielsweise gleichzeitig oder kurz nach dem Auslesen der Bildpunkte bzw. Pixelzelle, aber noch vor der Auswertung (beispielsweise ohne vorherige Prüfung, ob die Analogwerte für eine weitere Verarbeitung erhalten werden sollen) im Prozessorelement PE geschehen. In diesem Fall (also beispielsweise, wenn die Analogwerte für eine weitere Verarbeitung erhalten werden sollen) erfolgt die Übernahme des gespeicherten Werts, indem in der entsprechenden Spalte die nächste Speicherzelle ausgewählt wird (wodurch beispielsweise ein zeitnahes Überschreiben vermieden wird). Soll der gespeicherte Wert verworfen werden, bleibt die ausgewählte Adresse (die z. B. durch die Adressinformation 622 dargestellt wird) gleich und der Speicherwert wird vom nächsten Auslesewert überschrieben.

Sind alle Schreibzugriffe abgeschlossen, z. B. wenn eine der Speicherspalten voll ist, eine Ausgabe-Operation angefordert wurde oder die vordefinierte Region von Interesse (Rol) komplett ausgelesen wurde, wird beispielsweise eine zeilenweise Ausgabeoperation initiiert. Die zeilenweise Ansteuerung geschieht für alle Spalten gleichzeitig und in der gleichen Art und Weise wie beim Auslesen der Sensormatrix.

In der beispielhaften Realisierung gemäß den Fig. 5 und 6 werden die Speicherinhalte als Spannungen wie bei den Bildpunktzellen bzw. Pixelzellen ausgegeben. Es besteht beispielsweise die Möglichkeit, nur die Speicherzellen nacheinander oder abwechselnd mit den Bildpunktzellen (Pixelzellen) auszulesen. Eine Nachbearbeitung in den Prozessorelementen (PE) kann, je nach deren Parametrierung und deren internen Zustand, für alle gleichzeitig oder nur unter Beteiligung bestimmter Spalten erfolgen. Letzteres ermöglicht beispielsweise eine sehr feine Einstellung einer Region bzw. einer Region von Interesse ("Region of Interest" "Rol") und durch geeignetes Entfernen von Daten, also Deaktivieren der Ausgaben inaktiver Spalten, eine weitere Kompression.

In anderen Worten, es können beispielsweise die Prozessorelemente der einzelnen Spalten entscheiden, ob Daten der jeweiligen Spalte bzw. Bildsensorspalte in der Analogspeicher-Matrix eingespeichert werden sollen oder nicht. Durch gezielte Auswahl der Einzelspeicherinformation kann beispielsweise erreicht werden, dass nur Informationen von Bildsensorspalten eingespeichert wird, die für eine spätere Auswertung (z. B. durch eine digitale Verarbeitung nach einer Analog-zu-Digital-Wandlung) als relevant identifiziert wurden. Diese Identifizierung, welche Daten als relevant anzusehen sind, kann beispielsweise Spalten-individuell erfolgen.

Weiterhin ist festzuhalten, dass ein Datenausgang Out der in Fig. 5 beispielhaft gezeigten Bildpunktzelle bzw. Pixelzelle 500 beispielsweise mit einer zugehörigen Spaltenleitung der Bildsensormatrix verbunden sein kann. Der Bildsensor, oder vielmehr die Bildsensormatrix, kann somit eine Matrix von Bildpunktzellen 500 gemäß Fig. 5 aufweisen. Der Datenausgang Out der Bildpunktzelle 500 kann beispielsweise mit der Leitung 310 verbunden sein. Auswahlanschlüsse Sei mehrerer Bildpunktzellen einer Zeile des Bildsensors bzw. der Bildsensormatrix können beispielsweise miteinander verbunden sein, so dass die Ausgabe von Daten durch die Bildsensormatrix gleichzeitig für alle Spalten einer Bildzeile oder zumindest für eine Mehrzahl von Spalten einer Bildzeile gleichzeitig erfolgt.

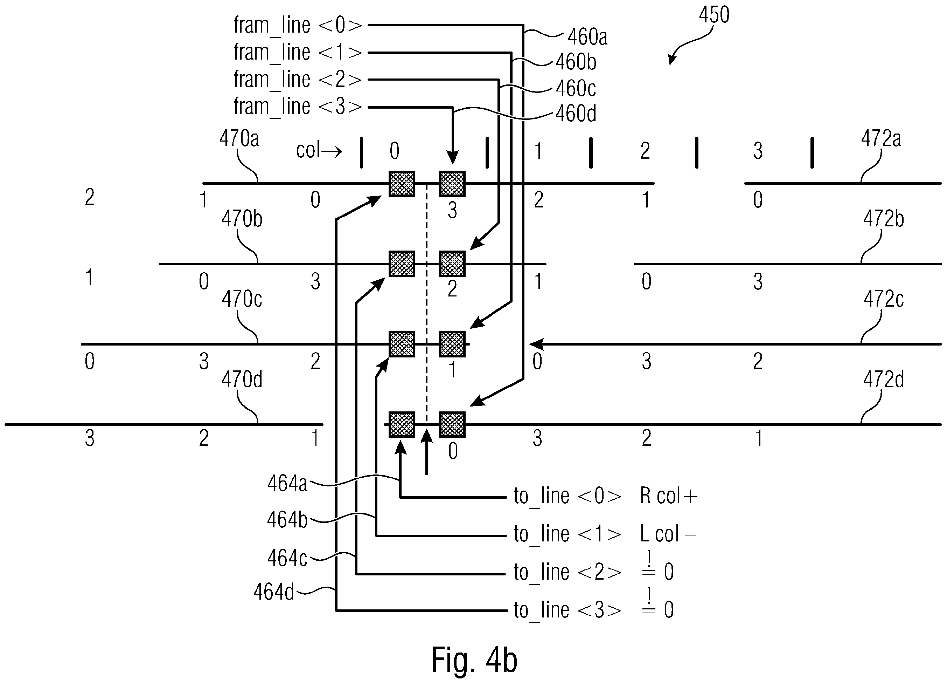

Ein weiteres Ausführungsbeispiel eines Multiplexers 450, der beispielsweise die Funktion des Multiplexers 232 oder die Funktion des Multiplexers 352 übernehmen kann, bzw. der beispielsweise an die Stelle des Multiplexers 400 treten kann, ist in der Fig 4b gezeigt.

Der Multiplexer 450 weist Verbindungsleitungen 470a bis 470d und 472a bis 472d auf, die sich beispielsweise jeweils über 4 Spaltenleitungspositionen erstrecken und die in der gezeigten Weise gegeneinander versetzt sind.

Die Verbindungsleitungen 470a bis 470d und 472a bis 472d sind beispielsweise über Schalter mit Eingangsleitungen (beispielsweise Eingangsleitungen 460a bis 460d) verbindbar. Ferner sind die Verbindungsleitungen 470a bis 470d und 472a bis 472d beispielsweise über Schalter mit Ausgangsleitungen (beispielsweise Ausgangsleitungen 464a bis 464d) verbindbar. Insofern ist der Multiplexer beispielsweise einsetzbar, um eine variable Verbindung von Eingangsleitungen mit Ausgangsleitungen herzustellen, wobei ein einstellbarer Versatz zwischen Eingangsleitungen und Ausgangsleitungen erzielbar ist. Beispielsweise kann durch eine entsprechende Ansteuerung der Schalter erreicht werden, dass eine Gruppe von Eingangsleitungen in einer Richtung versetzt mit einer Gruppe von Ausgangsleitungen verbunden wird. In welche Richtung der Versatz erfolgen soll, und wie viele Leitungen der Versatz betragen soll, kann durch eine geeignete Ansteuerung der Schalter festgelegt werden.

Bei dem Multiplexer 450 beträgt in beide Richtungen die Reichweite (nur) 3. Von unten sind nicht vier sondern nur zwei Selektionsleitungen (nach rechts oder nach links) notwendig. Die anderen beiden Selektionsleitungen sind beispielsweise redundant (und können optional eingespart werden). Grundsätzlich ist zu sagen, dass zwei oder mehr Schalterpositionen von unten sinnvoll sind.

Im Folgenden wird eine optionale Ergänzung des Konzepts beschrieben.

Beispielsweise kann der Auslesepfad (beispielsweise die Verbindung 110a bis 110d zwischen dem Bildsensor 120 und der Ausleseanordnung 100 oder die Verbindung 218a bis 218d zwischen der Sensor-Matrix 219 und der SIMD-Einheit 230 oder die Verbindung zwischen einer Bildpunktspalte und einer Spaltenleseanordnung) so ergänzt werden, dass ein standardmäßig ausgegebener Gleichspannungs-Offset (DC-Offset) ("0" entspricht beispielsweise einer Vollaussteuerung des Signals) abgezogen wird. Dazu ist beispielsweise (zum Beispiel in dem Auslesepfad) eine entsprechende Schaltung enthalten, die so lange von beiden Differenzleitungen den gleichen Strom abzieht, bis die Leitung mit dem kleineren Potential die untere Schranke erreicht, dann werden beispielsweise beide Stromentnahmen beendet (oder auf einen konstanten Niveau gehalten).

### 3. Anwendungsbeispiele

Verschiedene Möglichkeiten zum Einsatz der dargestellten Architektur und der daraus resultierenden Vorteile sind im Folgenden detailliert dargestellt.

### 3.1 Laserlichtschnitt

Im Folgenden wird zunächst Hintergrundinformation im Hinblick auf die Durchführung eines Laserlichtschnitts gegeben.

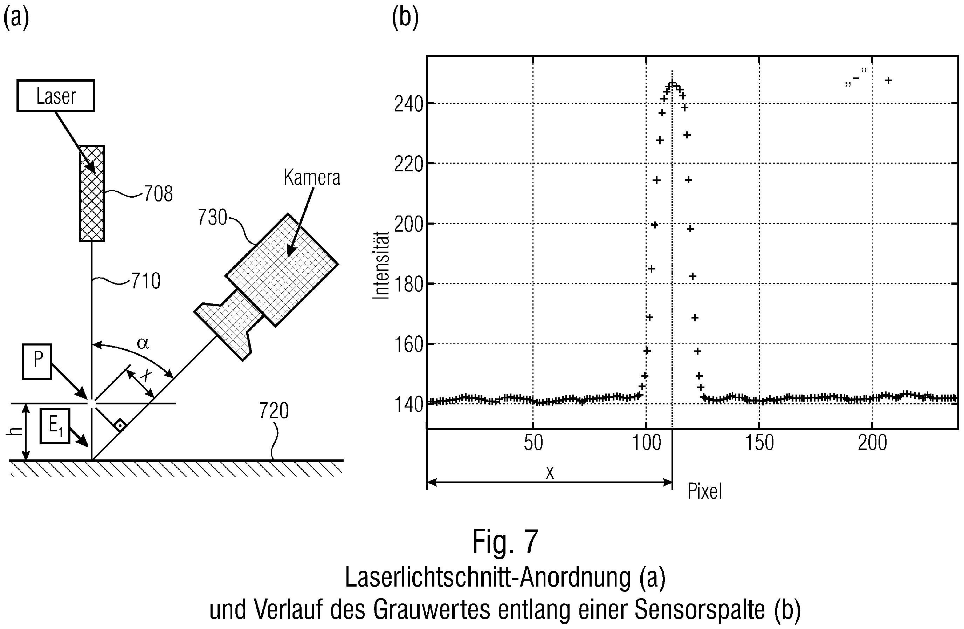

Bei dem betrachteten Verfahren "Laserlichtschnitt" (englisch: "Sheet of a Light", "SoL"), wie es beispielsweise in der Fig. 7 schematisch dargestellt ist, wird eine Laserlinie 710 (die durch einen Laser 708 erzeugt wird) auf eine zu vermessende dreidimensionale Oberfläche 720 projiziert, die mit einer Kamera 730 und einem Triangulationswinkel azwischen Laserebene und Kameraebene betrachtet wird. Ein Punkt P auf der Oberfläche befindet sich beispielsweise in einer Höhe h, was wiederum entlang einer Spalte in einem Kamerabild zu einer Auslenkung x von einem festgelegten Nullpunkt führt. Durch die Auswertung der Helligkeitsinformationen (Grauwerte in dem Kamerabild) entlang dieser Spalte wird beispielsweise eine Position der maximalen Intensität ermittelt, deren Lage x bezogen auf den festgelegten Nullpunkt der Höhe h entspricht. Für die in Fig. 7a dargestellte Anordnung wird sie beispielsweise gemäß der Formel h = x sin (a) berechnet.

Die zu lösende Bildverarbeitungsaufgabe besteht beispielsweise in einer exakten, möglichst Sub-Bildpunkt-genauen (Sub-Pixel-genauen) Bestimmung der Position des Maximums des Grauwerts entlang einer Bildsensor-Spalte. Diese Aufgabe kann beispielsweise durch das hierin (beispielsweise in einem folgenden Abschnitt) beschriebene erfindungsgemäße Bildsensorsystem gelöst werden.

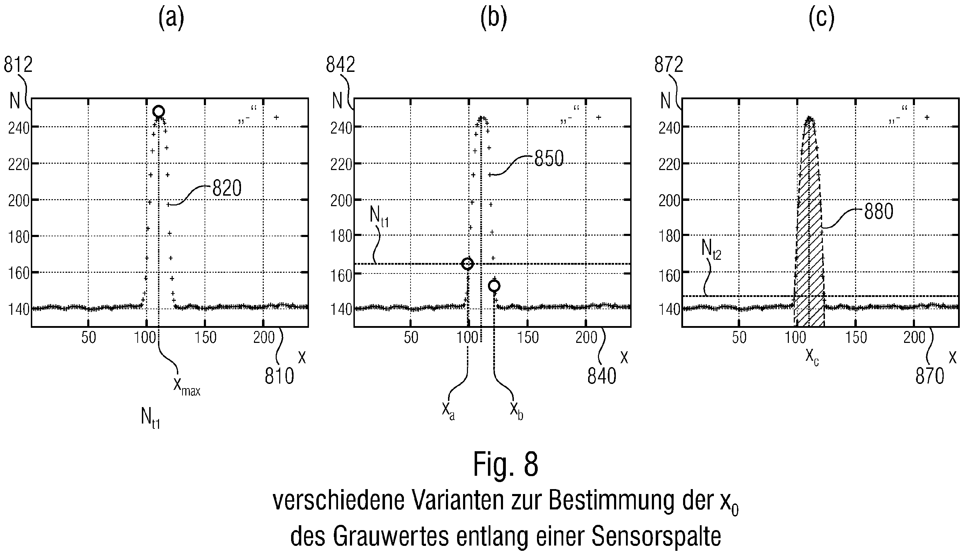

In Fig. 8 sind verschiedene Varianten zur Lösung dieses Problems dargestellt.

In anderen Worten, Fig. 8 zeigt eine schematische Darstellung von verschiedenen Varianten zur Bestimmung einer Position x₀ eines Maximums des Grauwerts entlang einer Sensorspalte. Abszissen 810, 840, 870 beschreiben jeweils eine Koordinate x entlang einer Spalte des Bildsensors bzw. der Bildsensormatrix. Ordinaten 812, 842, 872 beschreiben jeweils Helligkeitswerte in willkürlichen Einheiten. Verläufe 820, 850, 880 beschreiben den Verlauf der Helligkeitswerte entlang von Bildpunkten der jeweiligen Spalte des Bildsensors, die beispielsweise durch Analogwerte auf der Spaltenleitung dargestellt werden können. Im Folgenden wird auf verschiedene Verfahren eingegangen:
1. Bei einem ersten Verfahren, das beispielsweise in der Fig. 8a gezeigt ist, wird das Maximum der Helligkeit bzw. eines Helligkeitswerts gesucht, indem der Anstieg aufeinanderfolgender Helligkeitswerte berechnet wird, und indem bei einer Vorzeichenumkehr bzw. bei einem Nulldurchgang (positiv nach negativ) der Wert xₘₐₓ registriert wird. Dieses Verfahren liefert genau diese eine Bildpunktposition bzw. Pixelposition.
2. Bei einem zweiten Verfahren erfolgt für jeden Bildpunkt bzw. für jedes Pixel ein Vergleich des Grauwerts mit einer Schwelle Nₜ₁ und für die Überschreitung bzw. Unterschreitung werden die entsprechenden Werte xₐ und x_{b} (beispielsweise Indices der Bildzeilen, die einer Überschreitung des Schwellwerts vorausgehen oder nachfolgen) registriert. Die Position eines Maximums lässt sich anhand der Formel x_{c} = (xₐ+x_{b})/(2) schätzen und mit einer Sub-Bildpunkt-Genauigkeit (bzw. Sub-Pixel-Genauigkeit) von (1)/(2) angeben.
3. Das dritte Standardverfahren basiert auf den Annahmen, dass die Laserlinie eine Gauß-förmige Helligkeitsverteilung aufweist und der Sensor eine lineare Übertragungsfunktion von abgebildeter Helligkeit und ermitteltem digitalen Grauwert (oder analogen Grauwert) liefert. Unter diesen Umständen ist das Maximum der Kurve gleich ihrem Schwerpunkt (" Center of Gravity", "CoG"). Bei Vergleich mit einem Schwellwert Nₜ₂ kann die Anzahl der zur Berechnung des Schwellwerts benötigten Grauwerte oberhalb dieses Schwellwerts reduziert und die Genauigkeit erhöht werden. Somit kann beispielsweise die Position x_{c} des Schwerpunkts mit hoher Genauigkeit bestimmt werden, und als Maß für ein Maximum des Orts der Helligkeit verwendet werden.
4. Für weitere Verfahren ist beispielsweise eine Korrektheit der Annahme, dass eine Gauß-förmige projizierte Linie vorliegt und dass Linearität gegeben ist, aus 3. nicht erforderlich. Sie basieren beispielsweise auf einer Auswertung des Kurvenverlaufs zur Ermittlung des Maximums.

Es wurde erkannt, dass allen Verfahren die Tatsache gemeinsam ist, dass in einer bestimmten vorgegebenen Region von Interesse (Rol) in jeder Spalte nacheinander alle Grauwerte analysiert werden müssen.

Eine entsprechende Anzahl zu analysierender Grauwerte ist umso größer, je genauer die Position ermittelt werden muss bzw. je größer das untersuchte Intervall entlang einer Spalte ist. Damit bestimmt die Region von Interesse (Rol) primär die Geschwindigkeit der Bildaufnahme und der Bildverarbeitung.

Bei Laserlichtschnittsystemen (SoL-Systemen) mit Standardbildsensoren werden alle Grauwerte einer Region von Interesse (Rol) digitalisiert und ausgegeben. Bildaufnahme, Wandlung und Ausgabe legen anhand der Sensorschnittstelle typischerweise die Profilrate fest. Aufgrund verschiedener Effekte (Rauschen, "Speckles". Mehrfachreflexionen, Volumensteuerung) ist der Verlauf der Kurve zum Teil sehr gestört. wodurch vor der Bestimmung des Kurvenmaximums verschiedene Filterungen durchgeführt werden müssen (oder sollen), wodurch die Komplexität der Algorithmen insbesondere für große Sub-Bildpunkt-(Sub-Pixel-) Genauigkeiten besser als (1)/(8) zum Teil erheblich steigt. Diese Algorithmen werden insbesondere bei sehr schnellen Laserlichtschnittsystemen in programmierbarer digitaler Hardware (FPGA) realisiert, was bei hohen Anforderungen an die Profilrate einen entsprechend hohen technischen Aufwand nach sich zieht.

In [1] wurde ein programmierbarer Bildsensor ("Vision-System-on-Chip") vorgestellt, der beim Auslesen der Sensormatrix eindimensionale Faltungen (1D-Faltungen) durchführen kann und somit eine sehr gute spaltenweise Kurvenglättung ermöglicht. Eine Bestimmung der Grenzen gemäß Schwellwert-Verfahren 2 ist mit sehr guter Zuverlässigkeit und sehr hoher Profilrate möglich, jedoch ist eine Sub-Pixel-Auflösung besser als (1)/(2) und nur durch verschiedene Schwellwerte erreichbar, was jedoch die Geschwindigkeit beschränkt.

Im Folgenden wird ein neuer Ansatz bzw. eine erfindungsgemäße Lösung beschrieben. Diese erfindungsgemäße Lösung kann optional einige oder alle der oben beschriebenen Konzepte verwenden.

In anderen Worten, im Folgenden werden weitere Aspekte des Erfindungskonzepts beschrieben, die für sich genommen, aber auch in Kombination mit den in den Ansprüchen definierten Ausführungsbeispielen verwendet werden können. Die hierin beschriebenen Aspekte können auch zur Verbesserung oder Konkretisierung der in den Ansprüchen definierten Ausführungsbeispiele verwendet werden.

Im Folgenden werden einige allgemeinen Aspekte von Ausführungsbeispielen gemäß der vorliegenden Erfindung beschrieben.

Mit der hierin beschriebenen neuartigen Speicherarchitektur ist es möglich, Spaltenspezifisch nur noch relevante Daten, also z. B. Grauwerte in einem Intervall gemäß dem Schwellwert-Verfahren 2 oder um das Maximum gemäß Verfahren 1 aufzuzeichnen und beispielsweise komprimiert auszugeben. Dadurch reduziert sich beispielsweise eine Menge der aus dem Sensor (oder aus dem Analogspeicher) auszugebenden und zu verarbeitenden Grauwerte drastisch. So können mittels relativ einfacher digitaler Hardware oder gar auf einem Standard-Prozessor Höhenprofile wie in den Verfahren 3 oder 4 bestimmt werden.

Zum Erreichen der Kompression wird beispielsweise in jeder Spalte separat, beispielsweise durch Auswertung der aus der Sensormatrix ausgelesenen Pixeldaten, ermittelt, ob die Grauwertedaten relevant sind, also näherungsweise innerhalb des in der Abbildung 3 rot gekennzeichneten Intervalls liegen oder nicht. Alle außerhalb liegenden Daten werden weder aufgezeichnet noch ausgegeben (also beispielsweise nicht in den Analogspeicher übernommen oder unmittelbar überschrieben).

Beispielsweise kann das Prozessorelement in einer Spalte konfiguriert sein, um ein Maximum zu detektieren, wie dies anhand der Fig. 8a beschrieben wurde, und um beispielsweise eine vorgegebene (oder variable) Anzahl von Analogwerten (von den Bildsensorspaltenleitungen) "um das Maximum herum" (also von Bildzeilen, die um die erkannte Zeilenposition des Maximums herum liegen) in den Analogspeicher für eine weitere Verarbeitung einzuspeichern. Zu diesem Zweck kann das Prozessorelement beispielsweise durch eine analoge Verarbeitung (z. B. durch eine Differenzbildung von Analogwerten aus zwei benachbarten Bildsensorzeilen und anschließender Vorzeichenbestimmung) bestimmen, ob ein Maximum vorliegt (wobei beispielsweise auch noch überprüft werden kann, ob ein Absolutwert der Intensität ausreichend ist). Wird das Vorliegen eines Maximums, wie z. B. in der Fig. 8a gezeigt, erkannt, so kann das Prozessorelement ferner beispielsweise die Analogspeicher-Matrix so ansteuern, dass Analogwerte aus Zeilen, die um eine Zeilenposition eines erkannten Maximums herum liegen, in dem Analogspeicher für eine weitere Verarbeitung gespeichert werden. Das zu einer Bildspalte der Bildsensormatrix gehörende Prozessorelement kann beispielsweise ansprechend auf die Erkennung eines Maximums, wie in Fig. 8a gezeigt, von einem Betriebszustand, in dem Analogwerte in der Analogspeicher-Matrix zyklisch überschrieben werden, in einen Betriebszustand übergehen, in dem Analogwerte, die zu einer Zeilenposition um die erkannte Zeilenposition des Maximums herum liegen, für eine weitere Verarbeitung gespeichert (und nicht mehr unmittelbar bzw. zyklisch überschrieben) werden.

Als ein alternatives Beispiel kann das Prozessorelement, beispielsweise durch eine analoge Vorverarbeitung mit einem Schwellwertvergleich, erkennen, wenn Analogwerte von einer Spaltenleitung des Bildsensors größer sind als ein vorgegebener Schwellwert, beispielsweise größer als der in der Fig. 8b gezeigte Schwellwert Nₜ₁. Somit können beispielsweise solche Analogwerte für eine weitere Verarbeitung in der analogen Speichermatrix gespeichert werden, die größer sind als der in Fig. 2 gezeigte Schwellwert Nₜ₁, die also zu einem Bereich ausreichend hoher Intensität gehören und damit mit hoher Wahrscheinlichkeit zu einem Bildbereich gehören, auf den eine Laserlinie abgebildet wird.

Die durch das jeweilige Prozesselement für eine Speicherung ausgewählten Analogwerte können beispielsweise zu einem späteren Zeitpunkt (wenn beispielsweise eine Region von Interesse des Bildsensors vollständig durch die Prozessorelemente verarbeitet ist) für eine weitere digitale Verarbeitung digitalisiert (analog-zu-digitalgewandelt) und anschließend digital verarbeitet werden.

Eine Bestimmung eines Intervalls (beispielsweise einer Anzahl an für die weitere Verarbeitung gespeicherten Analogwerten pro Spalte) kann auf verschiedene Art und Weise erfolgen. Eine Auswahl des geeigneten Verfahrens geschieht beispielsweise unter anderem auf der Basis der erwarteten Streuung der auf den Sensor abgebildeten Laserlinienbreite unter Berücksichtigung des "Rauschteppichs" sowie des zur Verfügung stehenden Analogspeichers in Relation zur erwarteten Anzahl an Laserlinien. Beispielsweise kann die Anzahl an für die weitere Verarbeitung gespeicherten Analogwerten pro Spalte (also beispielsweise die Anzahl der Analogwerte, die in einer Spalte gespeichert werden, wenn das Vorhandensein einer Laserlinie erkannt wird) vorgegeben sein oder durch eine entsprechende Konfiguration des Prozessorelements eingestellt werden. Im Prozessorelement kann im Übrigen durch eine analoge Verarbeitung oder durch eine digitale Verarbeitung, oder durch eine Kombination aus einer analogen Verarbeitung und einer digitalen Verarbeitung, Spalten-individuell entschieden werden, in welchen Linien des Bildsensors Analogwerte in die analoge Speichermatrix zur weiteren Verarbeitung gespeichert werden.

Für die beispielhaften Beschreibungen wird im Übrigen davon ausgegangen, dass gleichzeitig mit dem Auslesen der Sensormatrix ein Wert in den Speicher geschrieben wird und "falsche" Schreiboperationen durch Überschreiben des Speicherinhalts widerrufen werden. Erfolgt zeitnah (beispielsweise vor einer Auslesung von Analogwerten für eine weitere digitale Verarbeitung) ein Überschreiben, so werden die eingeschriebenen Werte hier als nicht für die Weiterverarbeitung gespeichert betrachtet. Vielmehr werden Analogwerte dann als für die Weiterverarbeitung gespeichert betrachtet, wenn diese bis zu einem Auslesen, zum Zwecke der weiteren Verarbeitung, in der Speichermatrix gespeichert bleiben. Somit kann beispielsweise nur die Adressierung als Ergebnis der Analysen im Prozessorelement verändert werden. Beispielsweise kann das Prozessorelement, wenn erkannt wird, dass ein Analogwert für die weitere Verarbeitung relevant ist und damit für die weitere Verarbeitung gespeichert werden soll, eine Adressinformation (beispielsweise die Adressinformation 622) vor einem nächsten Speicherzugriff verändern, so dass die Adressinformation nicht mehr eine Speicherzelle referenziert, deren Inhalt für die weitere Verarbeitung gespeichert werden soll. Auf der anderen Seite kann beispielsweise das Prozessorelement die Adressinformation unverändert lassen, um beispielsweise ein sofortiges Überschreiben bei dem nächsten Schreibzugriff zu veranlassen, wenn herausgefunden wird, dass der soeben eingespeicherte Analogwert nicht für eine weitere Verarbeitung gespeichert werden soll. Dieses Vorgehen hat den Vorteil, dass die Auswertung gleichzeitig mit dem relativ zeitaufwändigen Einspeichern geschehen kann. Eine sequenzielle Abarbeitung der Schritte "Auslesen der Bildpunkte (Pixel), Auswertung, Adressierung der Speicherzelle und Abspeicherung im Analogspeicher" würde in manchen Fällen zu lange dauern (ist aber dennoch unter bestimmten Umständen sinnvoll).

Im Folgenden wird ein Speichern mit festem Intervall beschrieben. Diese Vorgehensweise kann als optional betrachtet werden.

Für eine Speicherung mit festem Speicherinhalt wird beispielsweise zu Beginn eine bestimmte Anzahl von Zellen in jeder Spalte, also die Länge des Speicher-Intervalls, festgelegt, die entsprechend einem Ringpuffer angesteuert werden. Für die Variante mit Adressauswahl muss dazu in manchen Fällen der Adress-Encoder in jedem Prozessorelement (oder zumindest in einigen Prozessorelementen) von einer Startadresse bis zu einer Endadresse zählen und dann wieder zurückgesetzt werden. Die Länge des Speicher-Intervalls (Längenoffset) legt fest, wie viele Werte abgelegt werden, und die Startadresse plus Längenoffset, welcher Speicherbereich gerade aktiv ist.

Ein Zeitpunkt für eine korrekte Speicherung kann auf verschiedene Art und Weise bestimmt werden, je nach angestrebter Komplexität und Anforderung durch die spätere Auswertung der festgehaltenen Analogwerte.

Eine erste Option ist ein Auslösen des Speichervorgangs auf der Basis der Bildpunktposition (Pixelposition) des Maximum-Werts xₘₐₓ (entsprechend der oben beschriebenen Variante 1 gemäß Fig. 8a). Da der Maximum-Wert den Mittelpunkt der Hüllkurve festlegt, muss (oder sollte) der Speichervorgang für dieses Profil etwa nach der Hälfte der Länge des Intervalls beendet werden. Zur Sub-Pixel-(Sub-Bildpunkt-) genauen Bestimmung der Lage des Maximums müssen bzw. sollten neben dem Inhalt des Ringpuffers beispielsweise der Wert xₘₐₓ und zum Beispiel der zugehörige Adresswert zur späteren Auswertung gespeichert werden. Dabei kann entweder jeder Grauwert oder auch jeder n-te Grauwert abgelegt werden, was beispielsweise dadurch realisiert werden kann, dass nur nach jeder n-ten ausgelesenen Bildzeile (Pixelzeile) der Adresszähler des Speichers inkrementiert wird.

In anderen Worten, betrachtet man das der Bildspalte der Sensormatrix zugeordnete Prozessorelement, so empfängt dieses zunächst Analogwerte von aufeinanderfolgenden Bildzeilen des Bildsensors und speichert diese im Sinne eines Ringpuffers zyklisch in einem Speicherbereich der Analogspeicher-Matrix ab, beispielsweise in einem vorgegebenen Bereich von Zeilen einer vorgegebenen Spalte der Analogspeicher-Matrix. Beispielsweise inkrementiert (oder dekrementiert) das Prozessorelement einen Adresszähler, der die entsprechende Zeile der Analogspeicher-Matrix auswählt, nach jedem Schreibvorgang (oder alternativ nach jedem n-ten Schreibvorgang). Erreicht der Adresszähler eine Grenze des vorgegebenen Speicherbereichs, also eine Obergrenze (oder Untergrenze) des vorgegebenen Speicherbereichs, so wird der Adresszähler zurückgesetzt, um wieder die Untergrenze (oder Obergrenze) des vorgegebenen Speicherbereichs zu referenzieren. Erkennt das Prozessorelement nun das Vorhandensein eines Maximums, wie dies beispielsweise anhand der Fig. 8a beschrieben wurde, so speichert das Prozessorelement einen aktuellen Stand des Adresszählers und gegebenenfalls auch (oder alternativ) eine Information über eine obere Grenze des aktuellen Speicherbereichs und/oder eine Information über eine untere Grenze des aktuellen Speicherbereichs in einem digitalen Speicher. Das Prozessorelement kann beispielsweise den Adresszähler weiterhin so ansteuern, dass nach dem Erkennen des Maximums noch eine bestimmte Anzahl von Analogwerten in den vorgegebenen Speicherbereich eingespeichert werden, um beispielsweise auch Analogwerte zu speichern. die auf das Maximum folgen. Sind beispielsweise in dem Ringpuffer (genug) Analogwerte, die dem Maximum vorausgehen und Analogwerte, die dem Maximum folgen, eingespeichert, so kann das Prozessorelement beispielsweise einen neuen Speicherbereich auswählen, indem der Adresszähler auf einen Anfangswert eines neuen Speicherbereichs gesetzt wird. In diesem neuen Speicherbereich können dann wieder Analogwerte von weiteren Zeilen der Bildsensormatrix eingespeichert werden, und das genannte Verfahren kann wiederholt werden.

Als Kompression (beispielsweise im Hinblick auf einen Speicherbedarf) ergibt sich für jedes Profil (also beispielsweise für ein Bild) die zu digitalisierende Zahl der Elemente (Zeilen) in dem Analogspeicher in Relation zu einer Zeilenzahl der Region von Interesse (Rol) auf dem Pixelfeld bzw. Bildpunkte-Feld. Sie ist umso größer, je größer die betrachtete Region von Interesse (Rol) ist. Werden beispielsweise neun Analogwerte für 1000 Sensorzeilen benötigt, ergibt sich eine Kompression von ca. 111:1, was auch eine maximale Beschleunigung der Ausgabe darstellt.

Insofern ist ersichtlich, dass hier eine sehr deutliche Kompression und damit Beschleunigung erzielbar ist. Dies gilt umso mehr, als beispielsweise bei einem Laserlichtschnitt oftmals nur eine einzige Linie vorhanden ist, während hingegen ein großer Teil des Bildes dunkel (bzw. zumindest deutlich unterhalb der Helligkeit der Laserlinie) ist.

Im Folgenden wird ein Speichern mit dynamischem Intervall beschrieben. Diesbezüglich sei darauf hingewiesen, dass das Speichern mit dynamischem Intervall optional erfolgen kann und beispielsweise alternativ zum "Speichern mit festem Intervall" verwendet werden kann.

Diese Variante hat im Vergleich zur vorherigen (Speichern mit festem Intervall) den Vorteil, dass für sehr unterschiedlich breite Laserlinien gut auswertbare Grauwerte abgelegt werden. Nachteilig jedoch ist die Unvorhersagbarkeit der Anzahl zu speichernder Grauwerte und damit der Anzahl speicherbarer Laserlinien.

Für eine Aktivierung und Deaktivierung der Speicherung können beispielsweise die Lagen der beiden Schwellwerte x, und x_{b} der oben beschriebenen Variante 2 (für jedes Pixel erfolgt ein Vergleich des Grauwerts mit einer Schwelle Nₜ₁ und für die Über- bzw. Unterschreitung werden die entsprechenden Werte xₐ und x_{b} registriert. Die Position des Maximums wird dann anhand der Formel x_{c} = (xₐ + x_{b}) / (2) geschätzt und mit einer Sub-Pixel-Genauigkeit von (1 )/( 2) angegeben) verwendet werden. Vorteilhaft ist, dass auf einen Ringpuffer für die Speicherung verzichtet und direkt anhand des Zustands des Prozessorelements entschieden werden kann, ob die Zeilenadresse im Speicher inkrementiert werden soll oder nicht. Ausgegeben werden neben dem Speicherinhalt beispielsweise xₐ und x_{b}. oder xₐ und der zugehörige Offset zu x_{b}. Die restlichen Aussagen gelten in gleicher Weise wie bei der Speicherung mit festem Intervall.

In anderen Worten: es können beispielsweise alle Analogwerte in den Analogspeicher für die weitere Verarbeitung gespeichert werden, die größer als ein bestimmter Schwellwert sind. Zudem wird eine Information darüber gespeichert, zu welchen Zeilen des Bildsensors die gespeicherten Analogwerte gehören. Die Anzahl der für eine Linie gespeicherten Analogwerten hängt dabei davon ab, wie viele zu der Linie gehörige Analogwerte größer als ein entsprechender Schwellwert sind.

### 3.2 Weißlicht-Interferometrie

Bei einer zweiten möglichen Anwendung von Ausführungsbeispielen gemäß der Erfindung, der Weißlicht-Interferometrie, besteht die Bildverarbeitungsaufgabe darin, in einem Stapel von zum Beispiel 10.000 Bildern pixelweise bzw. bildpunktweise die Grauwerte oder Differenzen aufeinanderfolgender Grauwerte bei Interferenzmodulationen, also wenn sie sich signifikant ändern, auszugeben.

Zur Lösung dieser Aufgabe gibt es verschiedene Ansätze. Sollen zum Beispiel möglichst exakt Nulldurchgänge ermittelt werden, so kann deren Auftreten als Trigger bzw. Auslösung verwendet werden, um zum Beispiel für das betroffene Pixel (Bildpunkt) einen oder mehrere zugehörige Analogwerte im Speicher festzuhalten. Hat der Nulldurchgang stattgefunden, so wird beispielsweise die Speicheradresse in der betreffenden Spalte inkrementiert und der gleichzeitig mit der Nulldurchgangsbestimmung abgelegte Wert behalten. Die Nulldurchgangsbestimmung erfolgt im Prozessorelement (PE) beispielsweise durch Vergleich des aktuellen Vorzeichens mit dem digital gespeicherten vorherigen. Ausgegeben wird für das Pixel (den Bildpunkt) die Bildnummer und der Analogwert.

Eine erzielbare Kompression kann je nach Kohärenzlänge und Stapelgröße bis zu 1000 sein. Wichtig ist es, sicherzustellen, dass der Speicher in je nach betrachteter Oberfläche ausreichend kurzen Intervallen ausgelesen wird.

Zusammenfassend ist somit festzuhalten, dass beispielsweise bei der Weißlicht-Interferometrie durch das Prozessorelement bestimmt werden kann, wenn ein Nulldurchgang einer Differenz aufeinanderfolgender Grauwerte stattgefunden hat. In diesem Fall kann das Prozessorelement (oder allgemein die Ausleseanordnung) feststellen, dass ein Analogwert in dem Analogspeicher für die weitere Verarbeitung gespeichert werden soll. Somit werden in dem Analogspeicher beispielsweise nur solche Analogwerte gespeichert, die als relevant angesehen werden, die also zu einem Nulldurchgang eines Differenzwerts gehören. Damit wird die gespeicherte Datenmenge im Vergleich zu einer Speicherung aller Analogwerte ganz deutlich verringert.

### 3_3 Weitere Anwendungsbeispiele

Ein mögliches Anwendungsbeispiel besteht in der Verwendung bzw. Implementierung eines Filter-Operators. Der Filter-Operator kann beispielsweise durch die Ausleseanordnung 100 gebildet werden. Hier kann beispielsweise die SIMD-Einheit 230 bzw. der analoge Datenpfad 300 zum Einsatz kommen. Beispielsweise kann die Filteroperation durch eine analoge Signalverarbeitung erfolgen, wobei beispielsweise Analogwerte von mehreren Bildsensorzellen in analoger Weise gespeichert und in analoger Weise (zum Beispiel gewichtet) kombiniert werden können.

Ausgangswerte einer solchen Filter-Operation (also beispielsweise einer gewichteten Kombination von Analogwerten mehrerer Bildsensorzellen) können beispielsweise auch zur Entscheidung darüber herangezogen werden, ob Analogwerte in dem Analogspeicher für eine weitere Verarbeitung gespeichert werden sollen oder nicht. Die Ausgangswerte der Filter-Operationen können aber auch die in dem Analogspeicher für die weitere Verarbeitung zu speichernden Analogwerte darstellen.

Somit kann, beispielsweise durch die analoge Realisierung eines Filter-Operators ein Aufwand bei der digitalen Bildverarbeitung verringert werden. Außerdem kann durch die Anwendung eines Filter-Operators bzw. einer Filter-Operation die Entscheidung darüber, welche Analogwerte für eine spätere Bearbeitung in dem Analogspeicher zu speichern sind, zuverlässiger gestaltet werden.

Ein weiteres Ausführungsbeispiel umfasst die Verwendung bzw. Implementierung einer "Verfolgung" ("Tracking"). Die Verfolgung bzw. das "Tracking" kann dazu verwendet werden, um beispielsweise Linien bzw. die Bewegung von Linien in einem Bildfeld zu verfolgen. Auf diese Weise kann beispielsweise effizient festgelegt werden, welche Analogwerte in dem Analogspeicher für die weitere Bearbeitung gespeichert werden sollen.

Ein weiteres Anwendungsbeispiel besteht in der Verwendung bzw. Implementierung einer flexiblen Region-von-Interesse (Rol). Beispielsweise ist es durch die parallele Bearbeitung einer Mehrzahl von Bildsensor-Analogsignalen von einer Mehrzahl von Spaltenleitungen möglich, für jede Spalte individuell festzulegen, von welchen Zeilen Analogwerte in dem Analogspeicher für die weitere Verarbeitung gespeichert werden sollen. Die entsprechende Steuerung kann beispielsweise durch die SIMD-Einheit oder durch ein Prozessorelement PE erfolgen.

Im Übrigen kann auch der oben beschriebene Multiplexer bei der Definition einer flexiblen Region-von-Interesse helfen. Beispielsweise kann für verschiedene Zeilen der Bildsensormatrix (oder für verschiedene Zeilen des Analogspeichers, oder für verschiedene Schreibvorgänge des Analogspeichers) individuell entschieden werden, welche "Verschiebung" (im Hinblick auf die Zuordnung) zwischen Spaltenleitungen der Bildsensormatrix und Spaltenleitungen des Analogspeichers besteht. Diese Verschiebung kann durch den Multiplexer flexibel eingestellt werden, so dass beispielsweise Analogsignale, die von einem Parallelogramm-förmigen Bereich der Bildsensormatrix stammen, in einen "rechteckförmigen" Bereich des Analogspeichers (im Hinblick auf die Organisation des Analogspeichers in Zeilen und Spalten) abgelegt werden. Auch dies trägt zu einer flexiblen Definition einer Region-von-Interesse bei. Die entsprechende Steuerung kann beispielsweise wieder über die SIMD-Einheit bzw. über die Prozessorelemente erfolgen.

Ein weiteres mögliches Anwendungsbeispiel besteht in einer Musterprojektion.

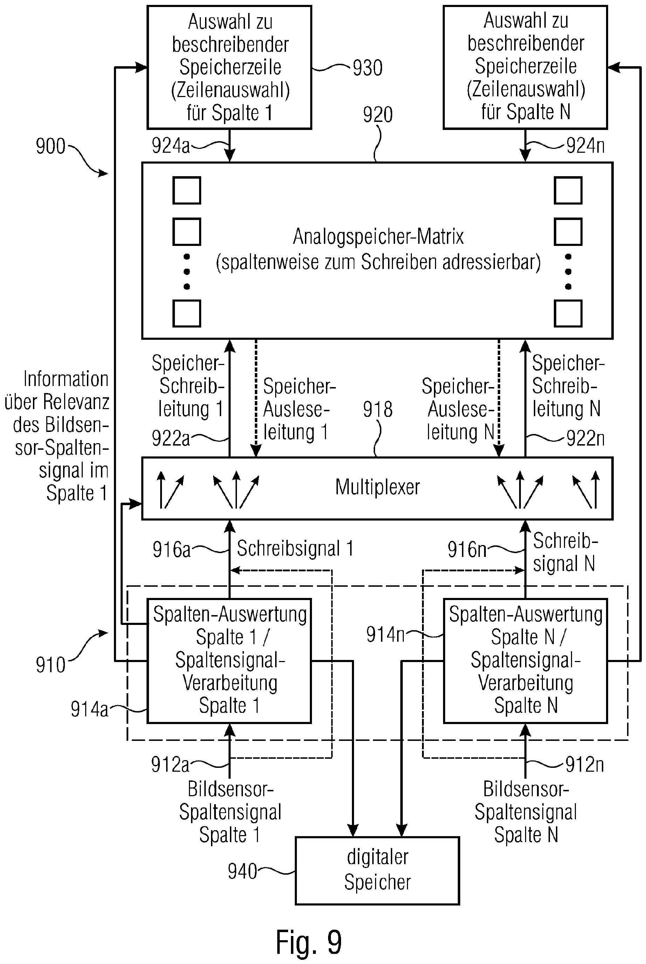

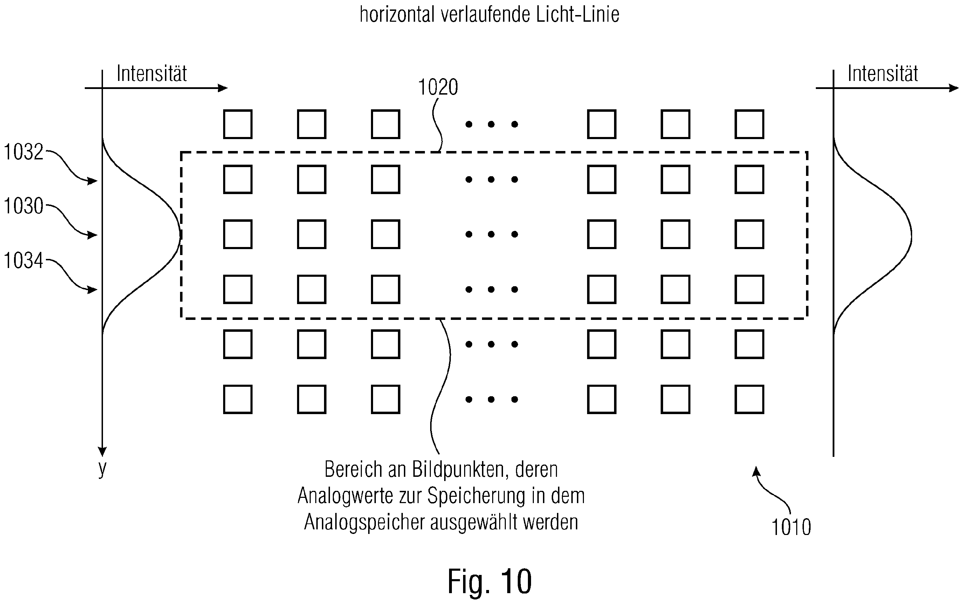

### 4. Ausführungsbeispiel gemäß Fig. 9 und Beispiele gemäß den Fig. 10, 11 und 12

Fig. 9 zeigt eine schematische Darstellung eines Systems, gemäß einem Ausführungsbeispiel der vorliegenden Erfindung.

Das System gemäß der Fig. 9 ist in seiner Gesamtheit mit 900 bezeichnet.

Das System 900 umfasst eine Ausleseanordnung 910, die ausgelegt ist, um Bildsensor-Spaltensignale 912a bis 912n zu empfangen, und die ausgelegt ist, um basierend darauf eine Speicherung ausgewählter Analogwerte in einem Analogspeicher 920 zu veranlassen. Zu diesem Zweck ist die Ausleseanordnung 910 mit Speicher-Schreibleitungen 922a bis 922n verbunden.

Ferner ist die Ausleseanordnung ausgelegt, um festzulegen, welche Zeile der jeweiligen Analogspeicher-Matrix-Spalten beschrieben werden soll. Zu diesem Zweck kann die Ausleseanordnung beispielsweise für jede Spalte der Analogspeicher-Matrix ein entsprechendes Zeilenauswahlsignal 924a bis 924n bereitstellen.

Diesbezüglich sei darauf hingewiesen, dass in manchen Ausführungsbeispielen die Zahl der Spalten der Analogspeicher-Matrix sich von der Anzahl der Spalten der Bildsensormatrix unterscheiden kann. Allerdings können die Zahlen auch gleich sein.

Die Ausleseanordnung umfasst beispielsweise für alle Spalten (bzw. zumindest für eine Mehrzahl von Spalten) Spalten-individuelle Spalten-Auswertungen und/oder Spaltensignal-Verarbeitungen. Die Spalten-Auswertungen bzw. Spaltensignal-Verarbeitungen können beispielsweise die Bildsensor-Spaltensignale 312a bis 312n empfangen und Schreibsignale 916a bis 916n bereitstellen, die beispielsweise einem Multiplexer 918 zur Verfügung gestellt werden. Der Multiplexer kann beispielsweise eine Zuordnung zwischen den Schreibsignalen 916a bis 916n und den Speicher-Schreibleitungen 922a bis 922n einstellen, wobei beispielsweise ein Bereich der Schreibsignale 916a bis 916n in variabler Weise einem Bereich der Speicher-Schreibleitung 922a bis 922n zugewiesen werden kann. Beispielsweise kann ein zusammenhängender Bereich von Schreibsignalen einem zusammenhängenden Bereich von Speicher-Schreibleitungen zugeordnet werden, wobei der Bereich von Schreibsignalen gegenüber dem Bereich von Speicher-Schreibleitungen spaltenmäßig versetzt sein kann (so dass beispielsweise ein i-tes Schreibsignal einer j-ten Speicher-Schreibleitung zugeordnet wird, und dass beispielsweise ein i+1-tes Schreibsignal einer j+1-ten Speicher-Schreibleitung zugeordnet wird, usw., wobei i von j verschieden ist.

Die Spalten-Auswertungen bzw. Spaltensignal-Verarbeitungen 914a bis 914n, die beispielsweise jeweils die Funktion des in Fig. 3 gezeigten analogen Datenpfads 300 ganz oder teilweise übernehmen können, und die zusätzlich die Funktion der SIMD-Einheit 230 ganz oder teilweise aufweisen können, sind beispielsweise ausgelegt, um zu entscheiden, von welchen Spalten Analogwerte zur weiteren Verarbeitung in die Analogspeicher-Matrix gespeichert werden sollen. Im Zusammenhang mit einer Vorrichtung 930 zur Auswahl zu beschreibender Speicherzeilen (die beispielsweise Spalten-individuell arbeiten kann) ist somit eine Auswahl möglich, in welche Spalten der Analogspeicher-Matrix Analogwerte, von welchen Bildpunkten für die weitere Verarbeitung gespeichert werden, bzw. welche Speicherzeilen der Analogspeicher-Matrix überschrieben werden oder unverändert bleiben.

Zusammenfassend ist somit festzuhalten, dass die Ausleseanordnung durch das Zusammenspiel der Spalten-Auswertung/Spaltensignal-Verarbeitung 914a bis 914n, des Multiplexers 918 und der Auswahl 930 zu beschreibender Speicherzeilen in sehr fein granularer Weise entscheiden kann, welche Analogwerte in die Analogspeicher-Matrix 920 zur weiteren Verarbeitung eingespeichert werden und wo die Analogwerte in der Analogspeichermatrix eingespeichert werden. Zusätzliche Informationen im Hinblick darauf, welche Analogwerte in die Analogspeicher-Matrix zur weiteren Verarbeitung eingespeichert wurden, können beispielsweise in einem digitalen Speicher 914 abgelegt werden, und stehen dann für die weitere Verarbeitung zur Verfügung.

Zusammenfassend ist somit zu sagen, dass die Spalten-Auswertungen 914a bis 914n beispielsweise die Aufgabe der SIMD-Einheit 230 und/oder des analogen Datenpfads 300 übernehmen können. Der Multiplexer 918 kann beispielsweise dem Speichermultiplexer 400 entsprechen, wobei die Schreibsignale 916a bis 916n beispielsweise den Signalen 410a bis 410h entsprechen können, und wobei die Signale 922a bis 922n beispielsweise den Signalen 414a bis 414h entsprechen können.

Spezifische Anwendungsbeispiele werden im Folgenden anhand der Fig. 10 bis 12 erläutert. Es sei darauf hingewiesen, dass die anhand der Figuren 10 bis 12 erläuterten Funktionalitäten einzeln oder in Kombination realisiert werden können.

Fig. 10 zeigt eine schematische Darstellung einer Auswertung bei Vorliegen einer horizontal verlaufenden Licht-Linie.

Insbesondere zeigt Fig. 10 einen Ausschnitt 1010 einer Bildsensormatrix, wobei beispielhaft davon ausgegangen wird, dass Bildpunkte (Pixel) in einem Bereich 1020 mit einer Intensität beleuchtet werden, die größer ist als ein vorgegebener Schwellwert (oder alternativ eine andere Bedingung erfüllen, die die Bildpunkte als relevant für eine weitere Verarbeitung erscheinen lässt). Der Bereich 1020 ist beispielsweise im Wesentlichen rechteckig. Eine mittlere Bildzeile 1030 des Bereichs 1020 kann beispielsweise mit einer maximalen Intensität bestrahlt werden, während äußere Bildzeilen 1032, 1034 des Bereichs 1020 mit geringerer Intensität bestrahlt werden. Die übrigen Bildzeilen in der Umgebung des Bereichs 1020 werden beispielsweise nur mit einer Intensität bestrahlt, die jeweils unterhalb eines Schwellwerts liegt (oder können alternativ auf anderem Wege als irrelevant für eine weitere Verarbeitung klassifiziert werden).

Durch die Ausleseanordnung kann nunmehr erkannt werden, dass Analogsignale von den Bildpunkten in dem Bereich 1020 in dem Analogspeicher zur weiteren Verarbeitung abgelegt werden sollen. Hierbei können beispielsweise Analogsignale von den verschiedenen Bildpunkten ausgewählt werden, und es kann durch die der ersten Bildspalte zugeordnete Auswerteeinrichtung entschieden werden, dass beispielsweise (nur) Analogwerte, die von Bildsensorzellen (Bildpunkten bzw. Bildsensormatrixzellen) in Zeilen 1032, 1030, 1034 stammen, in einer ersten Spalte des Analogspeichers für eine weitere Verarbeitung abgespeichert werden. Entsprechende Entscheidungen können auch für Analogwerte von Bildsensormatrix-Zellen in den übrigen Spalten getroffen werden.

Somit wird im Ergebnis erreicht, dass Analogsignale von den Bildsensorzellen in dem Bereich 1020 in dem Analogspeicher für die weitere Verarbeitung gespeichert werden, während hingegen Analogwerte von außerhalb des Bereichs 1020 liegenden Bildsensorzellen nicht für die weitere Verarbeitung gespeichert werden. Dadurch kann vermieden werden, dass für die spätere digitale Auswertung irrelevante Informationen in dem Analogspeicher gespeichert werden.

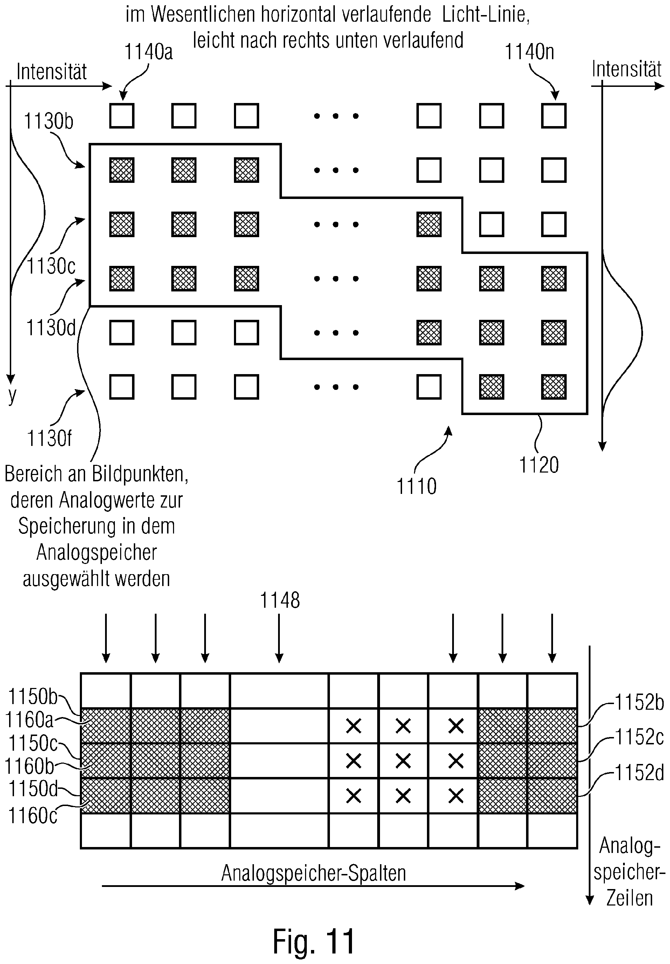

Ein etwas komplexeres Beispiel ist anhand der Fig. 11 beschrieben. Ein Ausschnitt der Bildsensormatrix ist bei Bezugszeichen 1110 gezeigt. Allerdings wird hierbei davon ausgegangen, dass eine im Wesentlichen horizontal über die Bildsensormatrix verlaufende helle Linie leicht von links oben nach rechts unten verläuft. Ein Bereich von Bildsensormatrix-Zellen, in dem eine Lichtintensität größer ist als ein vorgegebener Schwellwert (oder die eine andere Bedingung erfüllen), ist beispielsweise mit 1120 bezeichnet. Es ist nunmehr ersichtlich, dass der Bereich 1120 aufgrund des leicht schrägen Verlaufs der Licht-Linie nicht mehr rechteckig ist, sondern "Stufen" aufweist. Der Bereich 1120 erstreckt sich beispielsweise in einer ersten betrachteten Spalte 1140a von einer zweiten Zeile 1130b bis zu einer vierten Zeile 1130d. In einer letzten betrachteten Spalte 1140n erstreckt sich der Bereich 1120 hingegen von der vierten Zeile 1130d bis zu einer sechsten Zeile 1130f (wobei die entsprechenden Breiten hier nur rein beispielhaft zu verstehen sind).

Um die Lage der Licht-Linie sehr genau (idealerweise mit Sub-Bildpunkt-Genauigkeit) bestimmen zu können, sollten Analogwerte von Bildpunkten des Bereichs 1120 in dem Analogspeicher abgespeichert werden, während hingegen Analogwerte von Bildpunkten außerhalb des Bereichs 1120 nicht abgespeichert werden müssen (und nicht abgespeichert werden sollten), da sie keine wesentliche Information tragen.

Dies kann durch die hierin beschriebene Ausleseanordnung erreicht werden.

Beispielsweise kann die Ausleseanordnung bei der Auswertung von Bildsensor-Analogsignalen von einer ersten Spaltenleitung, die zu der Spalte 1140a gehört, beispielsweise erkennen, dass nur in den Bildzeilen 1130b bis 1130d Analogsignal-Werte vorliegen, die eine relevante Helligkeit anzeigen. Somit kann die Ausleseanordnung beispielsweise den Analogspeicher so ansteuern, dass von der Spalte 1140a nur Analogwerte, die von den Bildzeilen 1130b bis 1130d stammen, in dem Analogspeicher für eine weitere Verarbeitung eingespeichert werden. Entsprechende Analogwerte, die von den Bildpunkten 1130b bis 1130d stammen, werden beispielsweise in Zeilen 1150b bis 1150d der Analogspeicher-Matrix, die bei Bezugszeichen 1148 schematisch dargestellt ist, eingespeichert. Analogwerte, die von der ersten Bildspalte 1140a stammen, sind beispielsweise mit 1160a bis 1160c bezeichnet.

Im Hinblick auf die Bildspalte 1140n erkennt hingegen die zugehörige Verarbeitungsspalte der Ausleseanordnung, dass Analogwerte von Bildzeilen 1130b und 1130c nicht relevant sind. Daher werden Analogwerte, die von diesen Bildzeilen 1130b, 1130c stammen, für die Bildspalte 1140n nicht in der Analogspeicher-Matrix für die weitere Verarbeitung abgespeichert (sondern allenfalls dort zwischengespeichert und unmittelbar wieder überschrieben).

Erkennt die zu der Bildspalte 1140n gehörige Ausleseanordnung allerdings, dass in den Bildzeilen 1130d bis 1130f für die spätere Auswertung relevante Intensitäten vorliegen, so veranlasst die Ausleseanordnung ein Einspeichern von entsprechenden Analogwerten, und zwar bevorzugt in denselben Zeilen der Analogspeicher-Matrix 1148, in denen auch die Analogwerte der Sensormatrix-Zellen (Bildpunkte) der ersten Spalte 1140a gespeichert wurden. Die entsprechenden Analogwerte, die zu der Spalte 1140n gehören, sind mit 1152b bis 1152d bezeichnet.

Somit ist festzuhalten, dass die Ausleseanordnung jeder Spalte individuell (anhand von vorgegebenen bzw. programmierbaren Kriterien und gegebenenfalls unter Verwendung einer Signal-Vorverarbeitung bzw. Signal-Vorfilterung) identifiziert, Signale von welchen Zeilen 1130b bis 1130f der Bildsensormatrix zu einer Linie gehören. Die zu einer Linie gehörigen Analogwerte werden dann in den gleichen Zeilen des Analogspeichers abgelegt (zum Beispiel in den Speicherzeilen 1150b bis 1150d), und zwar auch dann, wenn die Linie schräg über die Bildsensormatrix verläuft. Somit sind Analogwerte, die zu einer Linie gehören, in einem "rechteckigen" Bereich des Analogspeichers abgelegt (zum Beispiel in den Zeilen 1150b bis 1150d), auch wenn die Linie schräg über die Bildsensormatrix verläuft. Dies wird einfach dadurch erreicht, dass Analogwerte nur dann in einem für die Abspeicherung einer Linie vorgesehenen Bereich des Analogspeichers abgelegt werden, wenn sie - bei Spalten-individueller Auswertung - eine bestimmte Bedingung erfüllen, also beispielsweise oberhalb eines Schwellwerts liegen oder in einem bestimmten Bereich um einen Maximalwert herum liegen.

Ein Auslesen der Analogwerte, die zu der Linie gehören, ist somit in einfacher Weise möglich, da die Analogwerte in einem rechteckigen Bereich des Analogspeichers liegen, so dass sie durch ein zeilenweises Auslesen verfügbar sind.

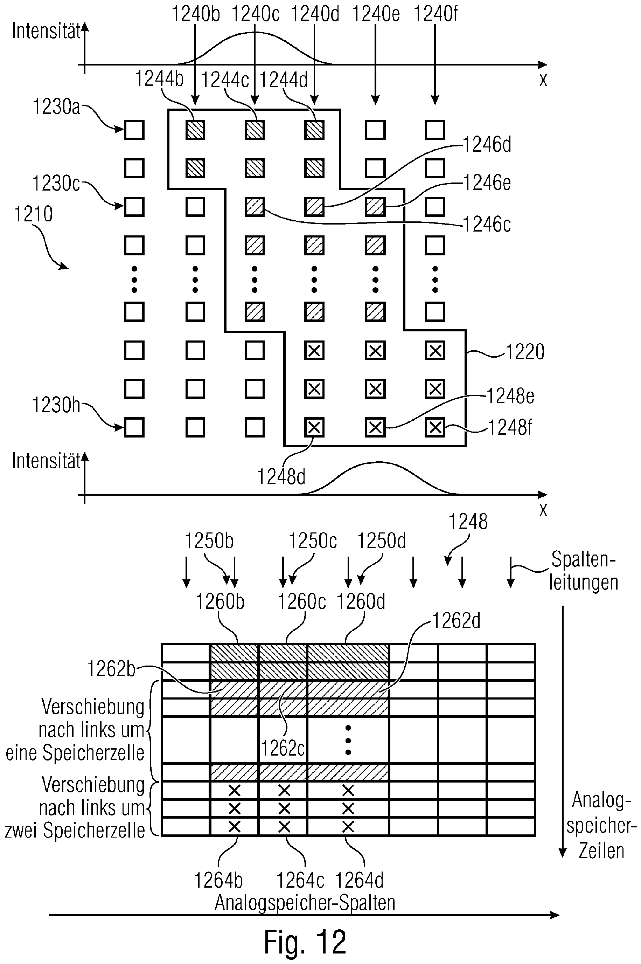

Fig. 12 zeigt ein weiteres Beispiel. Eine Bildsensormatrix ist bei Bezugszeichen 1210 gezeigt. Eine Linie ergibt hier signifikante Helligkeitswerte in einem Bereich 1220, der nicht rechteckig ist, da die Linie hier etwas schräg von links oben nach rechts unten verläuft. Beispielsweise erzeugt die Linie, die über die Bildsensormatrix verläuft, einen Intensitätsverlauf derart, dass in jeder Bildzeile etwa drei nebeneinander liegende Bildsensorzellen mit einer "signifikanten" Lichtintensität (die beispielsweise zu Sensorsignalen oberhalb eines Schwellwerts führen) beleuchtet werden.

Die Linie verläuft so, dass beispielsweise in einer ersten betrachteten Zeile 1230a eine signifikante Lichtintensität in einer zweiten Bildsensor-Spalte 1240b, in einer dritten Bildsensor-Spalte 1240c und in einer vierten Bildsensor-Spalte 1240d vorliegt. In einer letzten betrachteten Zeile 1230h liegt beispielsweise eine signifikante Lichtintensität in der vierten Spalte 1240d, in der fünften Spalte 1240e und in der sechsten Spalte 1240f vor. Eine spaltenparallele Verarbeitung von Bildsensor-Analogsignalen der Zeile 1230a durch die Ausleseanordnung ergibt somit, dass signifikante Lichtintensitätswerte (repräsentiert durch "signifikante" Bildsensor-Analogsignale) in den Spalten 1240b, 1240c, 1240d vorliegen. Somit werden beispielsweise selektiv Analogwerte von den Bildpunkten 1244b, 1244c, 1244d in dem Analogspeiocher abgespeichert, und zwar zum Beispiel in Speicherzellen 1260b, 1260c, 1260d von Speicherspalten 1250b, 1250c, 1250d. Dies wird beispielsweise erreicht, indem der Multiplexer für ein unmittelbares Durchschleifen eingestellt wird, so dass analoge Signale von den Spalten 1240b, 1240c, 1240d der Bildsensormatrix zu den Speicherspalten 1250b, 1250c, 1250d des Analogspeichers durchgeschleift werden.

Stellt die Ausleseanordnung nun beispielsweise bei der Auswertung von Signalen von Zeile 1230c der Bildsensormatrix fest, dass signifikante Helligkeitswerte in Spalten 1240c, 1240d, 1240e vorliegen, so kann die Ausleseanordnung den Multiplexer beispielsweise so konfigurieren, dass Analogsignale der Bildsensor-Spalten 1240c, 1240d, 1240e zu den Spalten 1250b, 1250c, 1250d des Analogspeichers durchgeschleift werden, was mit einem Spalten-Versatz zwischen den Bildsensor-Spalten und den Analogspeicher-Spalten verbunden ist. Somit können beispielsweise Analogsignale von den Bildsensorzellen 1246c, 1246d, 1246e in Speicherstellen 1262b, 1262c, 1262d gespeichert werden. Die Analogsignale von den Bildpunkten 1246c, 1246d, 1246e werden damit in den gleichen Spalten des Analogspeichers gespeichert wir die Analogsignale von den Bildpunkten 1244b, 1244c, 1244d, obwohl die für die weitere Verarbeitung zu speichernden Analogsignale in der Bildsensor-Zeile 1230c auf einem "spaltenmäßig versetzten" Satz von Spaltenleitungen ausgegeben werden (im Vergleich zu für die weitere Verarbeitung zu speichernden Analogsignalen der Bildzeile 1230a).

Betrachtet man schließlich die Bildzeile 1230h, so ist ersichtlich, dass hier relevante Intensitäten in den Spalten 1240d, 1240e, 1240f vorliegen (Bildzellen 1248d, 1248e, 1248f). Durch eine entsprechende Anpassung der Multiplexer-Einstellung, die durch die Ausleseanordnung gesteuert wird, wird erreicht, dass Analogwerte, die zu den Bildzellen 1248d, 1248e, 1248f gehören, in Speicherzellen 1264b, 1264c, 1264d abgelegt werden. Somit wird insgesamt erreicht, dass Analogwerte eines schräg über den Bildsensor verlaufenden Bereichs mit signifikanten Intensitäten in einem rechteckigen Bereich des Analogspeichers abgelegt werden, was eine spätere Auslesung und Auswertung deutlich erleichtert. Die Ausleseanordnung kann dabei einerseits erkennen, in welchen Spalten signifikante Analogwerte (die beispielsweise signifikante Lichtintensitäten repräsentieren) vorliegen. Ferner kann die Ausleseanordnung auch erkennen, wenn sich die Spaltenbereiche, in denen signifikante Analogwerte bzw. Analogsignale (bzw. Lichtintensitäten) vorliegen, von Zeile zu Zeile (des Bildsensors) verschieben. Wird eine solche Verschiebung der Spaltenbereiche mit signifikanten (zu speichernden) Analogwerten erkannt, so kann die Ausleseanordnung den Multiplexer entsprechend ansteuern, um zu erreichen, dass die zu speichernden Analogwerte verschiedener Bildzeilen in dem gleichen Spaltenbereich des Analogspeichers abgespeichert werden. Somit sind alle zu einer Linie gehörigen Analogwerte in einem rechteckigen Bereich abgespeichert, selbst wenn die Linie schräg über den Bildsensor verläuft. Dies wird durch das Zusammenspiel der Komponenten der Ausleseanordnung insbesondere auch mit dem Multiplexer erreicht.

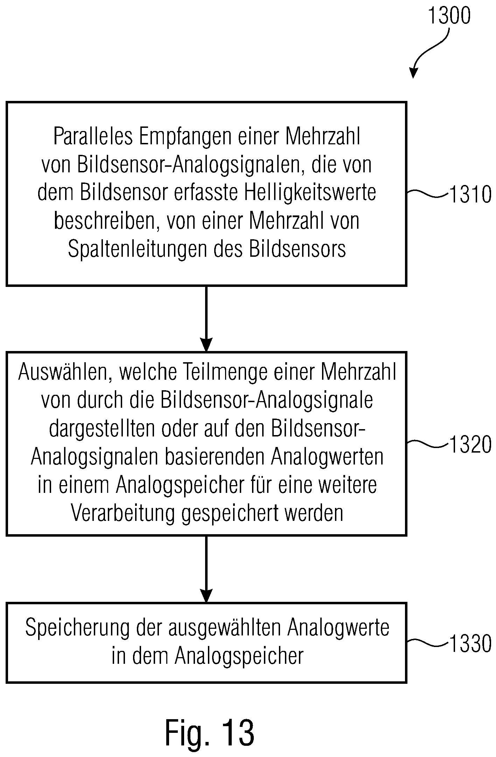

### 5. Verfahren gemäß Fig. 13

Fig. 13 zeigt ein Flussdiagramm eines Verfahren 1300 gemäß einem Ausführungsbeispiel der vorliegenden Erfindung.

Das Verfahren 1300 umfasst ein paralleles Empfangen 1310 einer Mehrzahl von Bildsensor-Analogsignalen, die von dem Bildsensor erfasste Helligkeitswerte in analoger Form beschreiben, von einer Mehrzahl von Spaltenleitungen des Bildsensors.

Das Verfahren umfasst ferner ein Auswählen 1320, welche Teilmenge einer Mehrzahl von durch die Bildsensor-Analogsignale dargestellten oder auf den Bildsensor-Analogsignalen basierenden Analogwerten in einem Analogspeicher für eine weitere Verarbeitung gespeichert werden.

Das Verfahren eine Speicherung 1330 der ausgewählten Analogwerte in dem Analogspeicher.

Das Verfahren kann optional um alle Merkmale und Funktionalitäten der Ausleseanordnung und des Bildsensor-Systems - einzeln oder in Kombination - ergänzt werden.

### 6. Weitere Aspekte

Im Folgenden werden Aspekte der Erfindung beschrieben, die einzeln oder in Kombination eingesetzt werden können. Die hier beschriebenen Aspekte können auch in Kombination mit den in den Ansprüchen definierten Ausführungsbeispielen und in Komination mit den oben beschriebenen Ausführungsbeispielen eingesetzt werden.
- Bildsensor-System-on-Chip (System-auf-Chip) mit
   ∘ Spalten-parallelen Prozessorelementen,
   ∘ Spalten-parallelen Analogspeichern,
   ∘ und Steuerungen, z.B.
      ▪ Zeilensteuerung für die Sensor-Matrix, (optional)
      ▪ Zeilensteuerung für die Speicher-Matrix (auch gemeinsam mit der für die Sensormatrix), (optional)
      ▪ sowie einer Steuerung für die Prozessorelemente (optional)
- Einer Speichermatrix (optional) (z.B. dem Analogspeicher)
   ∘ mit einer oder mehreren Speichern pro Zelle
      ▪ Speicherung mittels Kondensator, oder
      ▪ Speicherung mittels Stromspeicherzelle
   o die beispielsweise spaltenweise zum Schreiben und Rücklesen adressierbar ist, beispielsweise
      ▪ mittels Adressdecoder, oder
      ▪ mittels programmierbarer Schieberegister
   ∘ die beispielsweise spaltenweise beschreibbar ist
      ▪ mit einer Leitung zur Aktivierung des Schreibvorgangs, und/oder
      ▪ mit einer oder mehreren analogen Signalleitungen, und/oder
      ▪ mit oder ohne einer Leitung zur Aktivierung des Rücklesevorgangs bei Closed-Loop (geschlossene-Schleife) Einspeicherung, und/oder
      ▪ mit oder ohne einer Rückleseleitung
   ∘ die beispielsweise Zeilenweise zur Spalten parallelen Ausgabe adressierbar ist
      ▪ zum Ausgeben von Spannungen
         ▪ aktiv oder passiv, und/oder
         ▪ aktiv mit Zellen-lokaler Stromquelle für den Source-Folger, und/oder
         ▪ aktiv mit einer Stromquelle für jede Spalte
      ▪ zum Ausgeben von Strömen, und/oder
      ▪ zum Ausgeben von Ladungen
         ▪ als gepulste Ströme
         ▪ als geschaltete Kapazitäten
- Einer mixed-signal Verarbeitungseinheit (optional)
   ∘ mit einem Multiplexer (optional)
      ▪ mit einer oder mehreren Verbindungen pro Spalte, und/oder ▪ zum wahlfreien Zugriff auf den Speicher in der selben Spalte oder anderen Spalten
         ▪ schreibend, und/oder
         ▪ rücklesend
      ▪ zum Vertauschen von Spalten, und/oder
         ▪ zeilenweise angesteuert durch eine externe Steuerung für alle Spalten gleichzeitig, und/oder
         ▪ spaltenweise aus den Prozessorelementen, und/oder
         ▪ schreibend, und/oder
         ▪ lesend
      ▪ zum Zugriff auf die Speichermatrix (optional)
      ▪ und/oder zum Zugriff auf die Sensormatrix (optional)
   ∘ mit einer Analogeinheit (optional)
      ▪ zum spaltenweisen Auslesen der Sensormatrix und/oder
      ▪ zum Zwischenspeichern eines oder mehrerer Auslesewerte (optional)
      ▪ zur Berechnung von Differenzen zwischen gespeicherten Werten (optional) und/oder anliegenden Pixelwerten aus der Sensormatrix (optional)
      ▪ zur Berechnung einer Differenz (optional)
         ▪ Speicherung der Differenz auf einem Speicher
         ▪ oder direkte Weiterleitung der Differenz
      ▪ einer Schaltermatrix zur Weitergabe der Differenz (optional)
         ▪ mit der Möglichkeit zum Umpolen der Differenz
      ▪ einer Schaltung zur Vorzeichenbehandlung (optional)
         ▪ zur nichtinvertierten Ausgabe, und/oder
         ▪ zur invertierten Ausgabe, und/oder
         ▪ zur Nullsetzung negativer Werte
   ∘ mit einem Analog/Digital-Wandler (optional)
   ∘ mit einer digitalen Verarbeitungseinheit ALU (optional)
      ▪ zur Verarbeitung der digitalisierten Daten, und/oder
      ▪ zur Steuerung der Adressierung
         ▪ des Multiplexers, und/oder
         ▪ der Speichermatrix
   ∘ mit Speichern (optional)
      ▪ als Register und/oder
      ▪ als Speicherblock
   ∘ programmierbarem Buszugriff (optional)

### 7. Implementierungsalternativen

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Im Folgenden werden zusätzliche Ausführungsbeispiele und Aspekte der Erfindung beschrieben, die einzeln oder in Kombination mit beliebigen der hierin beschriebenen Merkmale, Funktionalitäten und Einzelheiten verwendet werden können.

Ein erster Aspekt bezieht sich auf eine Ausleseanordnung 100; 230,250,260; 910 für einen Bildsensor 120;210;1110;1210, wobei die Ausleseanordnung ausgelegt ist, um parallel eine Mehrzahl von Bildsensor-Analogsignalen, die von dem Bildsensor erfasste Helligkeitswerte in analoger Form beschreiben, von einer Mehrzahl von Spaltenleitungen 110a-110d; 310; 912a-912n des Bildsensors zu empfangen, und wobei die Ausleseanordnung ausgelegt ist, um auszuwählen, welche Teilmenge einer Mehrzahl von durch die Bildsensor-Analogsignale dargestellten oder auf den Bildsensor-Analogsignalen basierenden Analogwerten in einem Analogspeicher 130; 220; 920;1148;1248 für eine weitere Verarbeitung gespeichert werden, und um die Speicherung der ausgewählten Analogwerte in dem Analogspeicher zu veranlassen oder um die ausgewählten Analogwerte in dem Analogspeicher zu speichern.

Gemäß einem zweiten Aspekt unter Bezugnahme auf den ersten Aspekt ist die Ausleseanordnung 100; 230,250,260; 910 ausgelegt, um basierend auf einer Auswertung der Bildsensor-Analogsignale zu entscheiden, welche Teilmenge einer Mehrzahl von durch die Bildsensor-Analogsignale dargestellten oder auf den Bildsensor-Analogsignalen basierenden Analogwerten in einem Analogspeicher für eine weitere Verarbeitung gespeichert wird.

Gemäß einem dritten Aspekt unter Bezugnahme auf den zweiten Aspekt ist die Ausleseanordnung ausgelegt, um zu erkennen, wenn ein Verlauf eines zu einer jeweiligen Bildspalte 1140a-1140n; 1240b-1240f gehörigen Bildsensor-Analogsignals 110a-110d; 218a-218d; P_{0,}P_{1;} 912a-912n über eine Mehrzahl von Bildzeilen 1130b-1130f; 1230a-1230h hinweg einen Verlauf aufweist, der eine vorgegebene Bedingung erfüllt, und wobei die Ausleseanordnung ausgelegt ist, um ansprechend auf eine Erkennung, dass ein Verlauf eines zu einer jeweiligen Bildspalte gehörigen Bildsensor -Analogsignals über eine Mehrzahl von Bildzeilen hinweg einen Verlauf aufweist, der eine vorgegebene Bedingung erfüllt, eine Speicherung von Analogwerten, die den Verlauf beschreiben, in dem Analogspeicher zu veranlassen.

Gemäß einem vierten Aspekt unter Bezugnahme auf den zweiten oder dritten Aspekt ist die Ausleseanordnung ausgelegt, um eine analoge Vorverarbeitung der Bildsensor-Analogsignale 110a-110d; 218a-218d;P₀,P₁; 912a-912n vorzunehmen, um vorverarbeitete Signale V_{sgn} zu erhalten, und wobei die Ausleseanordnung ausgelegt ist, auf den Bildsensor-Analogsignalen basierende Analogwerte, die durch die vorverarbeiteten Signale V_{sgn} dargestellt werden, für die Speicherung in dem Analogspeicher auszuwählen.

Gemäß einem fünften Aspekt unter Bezugnahme auf zumindest einen des ersten bis vierten Aspekt ist die Ausleseanordnung ausgelegt, um ansprechend darauf, dass ein Bildsensor-Analogsignal 110a-110d; 218a-218d;P₀,P₁; 912a-912n oder ein auf einem Bildsensor-Analogsignal basierendes Signal M_{D}, V_{sgn} einen vorgegebenen Schwellwert in einer ersten Richtung und/oder in einer zweiten Richtung passiert, zu entscheiden, dass ein durch das jeweilige Bildsensor-Analogsignal dargestellter oder auf dem jeweiligen Bildsensor-Analogsignal basierender Analogwerte in dem Analogspeicher für eine weitere Verarbeitung gespeichert wird.

Gemäß einem sechsten Aspekt unter Bezugnahme auf den fünften Aspekt ist die Ausleseanordnung ausgelegt, um bei Passieren des vorgegebenen Schwellwerts zusätzlich eine digitale Information xₐ, x_{b}; x_{c} zu speichern, die eine Information darüber trägt, bei Auslesen welcher Zeile des Bildsensors eine Passieren des vorgegebenen Schwellwerts erkannt wurde.

Gemäß einem siebten Aspekt unter Bezugnahme auf zumindest einen des ersten bis sechsten Aspekts ist die Ausleseanordnung ausgelegt, um spalten-individuell oder für verschiedene Spalten 1140a-1140n; 1240b-1240f separat oder für verschiedene Gruppen von Spalten separat zu entscheiden, ob ein durch ein Bildsensor-Analogsignal 110a-110d; 218a-218d;P₀,P₁; 912a-912n einer jeweiligen Spaltenleitung dargestellter Analogwert, oder ein auf dem Bildsensor-Analogsignal der jeweiligen Spaltenleitung basierender Analogwert M_{D}, V_{sgn}, in dem Analogspeicher für eine weitere Verarbeitung gespeichert werden soll.

Gemäß einem achten Aspekt unter Bezugnahme auf zumindest einen des ersten bis siebten Aspekts ist die Ausleseanordnung ausgelegt, um eine Konfigurationsinformation zu erhalten und auszuwerten, die für verschiedene Spalten 1140a-1140n; 1240b-1240f separat festlegt, von welchen Bildzeilen 1130b-1130f; 1230a-1230h durch die Bildsensor-Analogsignale 110a-110d; 218a-218d;P₀,P₁; 912a-912n dargestellte Analogwerte oder auf den Bildsensor-Analogsignalen basierende Analogwerten in dem Analogspeicher für eine weitere Verarbeitung gespeichert werden sollen.

Gemäß einem neunten Aspekt unter Bezugnahme auf zumindest einen des ersten bis achten Aspekts ist die Ausleseanordnung ausgelegt, um eine Speicherung der durch die Bildsensor-Analogsignale 110a-110d; 218a-218d;P₀,P₁; 912a-912n dargestellten oder auf den Bildsensor-Analogsignalen basierenden Analogwerte ohne vorherige Prüfung, ob die Analogwerte für eine weitere Verarbeitung erhalten werden sollen, zu veranlassen, und wobei die Ausleseanordnung ausgelegt ist, um ein Überschreiben der ohne vorherige Prüfung gespeicherten Analogwerte zu veranlassen, wenn die Ausleseanordnung feststellt, dass der ohne vorherige Prüfung gespeicherte Analogwert nicht für eine weitere Verarbeitung gespeichert werden soll.

Gemäß einem zehnten Aspekt unter Bezugnahme auf zumindest einen des ersten bis neunten Aspekts ist die Ausleseanordnung ausgelegt, um aufeinanderfolgende durch die Bildsensor-Analogsignale 110a-110d; 218a-218d;P₀,P₁; 912a-912n dargestellte oder auf den Bildsensor-Analogsignalen basierende Analogwerte nacheinander in einen als Ringpuffer angesteuerten oder ausgelegten Bereich des Analogspeichers einzuspeichern.

Gemäß einem elften Aspekt unter Bezugnahme auf den zehnten Aspekt ist die Ausleseanordnung ausgelegt, um ansprechend auf eine Erkennung, dass in den Ringpuffer eingespeicherte Analogwerte für eine weitere Verarbeitung gespeichert werden sollen, ein Überschreiben zu unterbinden.

Gemäß einem zwölften Aspekt unter Bezugnahme auf den elften Aspekt erfolgt die Erkennung, dass in den Ringpuffer eingespeicherte Analogwerte für eine weitere Verarbeitung gespeichert werden sollen, basierend auf einer Erkennung eines lokalen oder absoluten Maximums eines Helligkeitswertes auf der der Basis eines Bildsensor-Analogsignals 110a-110d; 218a-218d;P₀,P₁; 912a-912n.

Gemäß einem dreizehnten Aspekt unter Bezugnahme auf zumindest einen des ersten bis zwölften Aspekts ist die Ausleseanordnung ausgelegt, um ansprechend auf eine Erkennung, dass Analogwerte für eine weitere Verarbeitung gespeichert werden sollen, eine feste Anzahl an Analogwerten für eine weitere Verarbeitung zu speichern , oder wobei die Ausleseanordnung ausgelegt ist, um ansprechend auf eine Erkennung, dass Analogwerte für eine weitere Verarbeitung gespeichert werden sollen, abhängig von den Analogwerten eine variable Anzahl an Analogwerten für eine weitere Verarbeitung zu speichern.

Gemäß einem vierzehnten Aspekt unter Bezugnahme auf zumindest einen des ersten bis dreizehnten Aspekts ist die Ausleseanordnung ausgelegt, um selektiv Analogwerte in dem Analogspeicher zu speichern, die eine vorgegebene Bedingung erfüllen.

Gemäß einem fünfzehnten Aspekt unter Bezugnahme auf zumindest einen des ersten bis vierzehnten Aspekts ist die Ausleseanordnung 100; 230,250,260; 910 ausgelegt, um eine Information xₐ, x_{b}; x_{c} zu speichern, die beschreibt, welche Teilmenge der Mehrzahl von durch die Bildsensor-Analogsignale 110a-110d; 218a-218d;P₀,P₁; 912a-912n dargestellten oder auf den Bildsensor-Analogsignalen basierenden Analogwerten in dem Analogspeicher für eine weitere Verarbeitung gespeichert wurde.

Gemäß einem sechzehnten Aspekt unter Bezugnahme auf zumindest einen des ersten bis fünfzehnten Aspekts ist die Ausleseanordnung ausgelegt, um eine Zuordnung zwischen einer Bildspalte 1240d und Spalten 1250d,1250c,1250b des Analogspeichers, in denen zu der Bildspalte gehörige Analogwerte 1260d, 1262c,1264b gespeichert werden, zu variieren.

Gemäß einem siebzehnten Aspekt unter Bezugnahme auf zumindest einen des ersten bis sechzehnten Aspekts ist die Ausleseanordnung ausgelegt, um Analogwerte 1260b-1260d, 1262b-1262d, 1264b-1264d, die Bildpunkten 1244a-1244d,1246c-1246e,1248d-1248f zugeordnet sind, bei einem Einspeichern in den Analogspeicher umzuordnen.

Gemäß einem achtzehnten Aspekt unter Bezugnahme auf zumindest einen des ersten bis siebzehnten Aspekts ist die die Ausleseanordnung ausgelegt, um die Analogwerte in den Analogspeicher so einzuspeichern, dass aus dem Analogspeicher ausgelesene Signale und die Bildsensor-Analogsignale im Hinblick auf Signalpegel kompatibel sind.

Gemäß einem neunzehnten Aspekt unter Bezugnahme auf zumindest einen des ersten bis achtzehnten Aspekts ist die Ausleseanordnung ausgelegt, um analoge Rechenoperationen basierend auf aus dem Analogspeicher ausgelesenen Signalen auszuführen.

Gemäß einem zwanzigsten Aspekt unter Bezugnahme auf zumindest einen des ersten bis neunzehnten Aspekts ist die Ausleseanordnung ausgelegt, um analoge Rechenoperationen auszuführen, bei denen Bildsensor-Analogsignale und aus dem Analogspeicher ausgelesene Signale kombiniert werden.

Ein einundzwanzigster Aspekt bezieht sich auf ein Bildsensor-System mit folgenden Merkmalen: einem Bildsensor 120;210;730;1010;1110;1210; einer Ausleseanordnung 100; 230,250,260; 910 gemäß einem der Aspekte 1 bis 17; und einem Analog-Digital-Wandler; und einer digitalen Verarbeitungseinrichtung; wobei der Analog-Digital-Wandler ausgelegt ist, um in dem Analogspeicher 130; 220; 920;1148;1248 gespeicherte Analogwerte 1150b-d, 1152b-d; 1260b-d,1262b-d,1264b-d, oder davon abgeleitete Analogwerte, zu digitalisieren, und wobei die digitale Verarbeitungseinrichtung ausgelegt ist, um basierend auf von dem Analog-Digital-Wandler gelieferten digitalen Signalen eine Bildinformation zu analysieren.

Gemäß einem zweiundzwanzigsten Aspekt unter Bezugnahme auf den einundzwanzigsten Aspekt ist der Analog-Digital-Wandler ausgelegt, um die in dem Analogspeicher 130; 220; 920;1148;1248 gespeicherte Analogwerte 1150b-d, 1152b-d; 1260b-d,1262b-d,1264b-d, oder davon abgeleitete Analogwerte, in einem separaten Ausleseprozess, der einem Auslesen des Bildsensors nachgelagert ist, zu digitalisieren.

Gemäß einem dreiundzwanzigsten Aspekt unter Bezugnahme auf den einundzwanzigsten oder zweiundzwanzigsten Aspekt ist die digitale Verarbeitungseinrichtung ausgelegt, um basierend auf von dem Analog-Digital-Wandler gelieferten digitalen Signalen eine Lage einer Linie 1020;1120;1220 in einem von dem Bildsensor erfassten Bild zu erfassen.

Gemäß einem vierundzwanzigsten Aspekt unter Bezugnahme auf zumindest einen des einundzwanzigsten bis dreiundzwanzigsten Aspekts ist die digitale Verarbeitungseinrichtung ausgelegt, um eine Information xₐ, x_{b}; x_{c} auszuwerten, die beschreibt, welche Teilmenge der Mehrzahl von durch die Bildsensor-Analogsignale 110a-110d; 218a-218d;P₀,P₁; 912a-912n dargestellten oder auf den Bildsensor-Analogsignalen basierenden Analogwerten in dem Analogspeicher für eine weitere Verarbeitung gespeichert wurde.

Gemäß einem fünfundzwanzigsten Aspekt unter Bezugnahme auf zumindest einen des einundzwanzigsten bis vierundzwanzigsten Aspekts ist das Bildsensor-System ausgelegt, um eine Position einer Licht-Linie 1120 entlang einer jeweiligen Spalte 1140a,1140n des Bildsensors für verschiedene Spalten des Bildsensors zu bestimmen.

Gemäß einem sechsundzwanzigsten Aspekt unter Bezugnahme auf zumindest einen des einundzwanzigsten bis vierundzwanzigsten Aspekts ist das Bildsensor-System ausgelegt, um in dem Analogspeicher selektiv Analogwerte zu speichern, die bei einer signifikanten Veränderung eines Bildsensor-Analogsignals 110a-110d; 218a-218d;P₀,P₁; 912a-912n oder eines auf einem Bildsensor-Analogsignal basierendes Signals vorliegen.

Gemäß einem siebenundzwanzigsten Aspekt unter Bezugnahme auf den sechsundzwanzigsten Aspekt ist das Bildsensor-System ausgelegt, um basierend auf den selektiv gespeicherten Analogwerten eine Auswertung einer Weißlicht-Interferometrie durchzuführen.

Ein achtundzwarizigster Aspekt bezieht sich auf ein Verfahren 1300 zum Auslesen eines Bildsensors, wobei das Verfahren ein paralleles Empfangen 1310 einer Mehrzahl von Bildsensor-Analogsignalen 110a-110d; 218a-218d; P_{0,}P_{1;} 912a-912n, die von dem Bildsensor erfasste Helligkeitswerte in analoger Form beschreiben, von einer Mehrzahl von Spaltenleitungen des Bildsensors umfasst, und wobei das Verfahren ein Auswählen 1320, welche Teilmenge einer Mehrzahl von durch die Bildsensor-Analogsignale dargestellten oder auf den Bildsensor-Analogsignalen basierenden Analogwerten in einem Analogspeicher für eine weitere Verarbeitung gespeichert werden, umfasst, und wobei das Verfahren eine Speicherung 1330 der ausgewählten Analogwerte in dem Analogspeicher umfasst.

Ein neunundzwanzigster Aspekt bezieht sich auf eine Ausleseanordnung 100; 230,250,260; 910 für einen Bildsensor, wobei die Ausleseanordnung ausgelegt ist, um parallel eine Mehrzahl von Bildsensor-Analogsignalen 110a-110d; 218a-218d; P₀,P_{1;} 912a-912n, die von dem Bildsensor erfasste Helligkeitswerte in analoger Form beschreiben, von einer Mehrzahl von Spaltenleitungen des Bildsensors zu empfangen, und wobei die Ausleseanordnung ausgelegt ist, um eine Zuordnung zwischen einer Bildspalte 1240b-1 240f und Spalten 1250b-1250d eines Analogspeichers, in denen zu der Bildspalte gehörige Analogwerte 1260b-1260d, 1262b-1262d, 1264b-1264d gespeichert werden, zu variieren, so dass zu einer Bildspalte 1240d gehörige Analogwerte in verschiedenen Speicherspalten 1250d,1250c,1250b des Analogspeichers abgespeichert werden.

Gemäß einem dreißigsten Aspekt unter Bezugnahme auf den neunundzwanzigsten Aspekt ist die Ausleseanordnung ausgelegt, um Analogwerte, die Bildpunkten zugeordnet sind, bei einem Einspeichern in den Analogspeicher umzuordnen.

### 8. Referenzen

[1] Jens Döge, Christoph Hoppe, Peter Reichel, Nico Peter. Megapixel HDR Image Sensor SoC with Highly Parallel Mixed-Signal Processing. International Image Sensor Workshop (IISW), 2015.
[2] Leif Lindgren, Johan Melander, Robert Johansson, B Moller. A multiresolution 100-GOPS 4-Gpixels/s programmable smart vision sensor for multisense imaging. Solid-State Circuits, IEEE Journal of, 40(6):1350-1359, 2005.

## Patentansprüche

1. Eine Ausleseanordnung (100; 230,250,260; 910) für einen Bildsensor,
wobei die Ausleseanordnung ausgelegt ist, um parallel eine Mehrzahl von Bildsensor-Analogsignalen (110a-110d; 218a-218d; P₀,P_{1;} 912a-912n), die von dem Bildsensor erfasste Helligkeitswerte in analoger Form beschreiben, von einer Mehrzahl von Spaltenleitungen des Bildsensors zu empfangen, und
wobei die Ausleseanordnung ausgelegt ist, um eine Zuordnung zwischen einer Bildspalte (1240b-1240f) und Spalten (1250b-1250d) eines Analogspeichers, in denen zu der Bildspalte gehörige Analogwerte (1260b-1260d, 1262b-1262d, 1264b-1264d) gespeichert werden, zu variieren, so dass zu einer Bildspalte (1240d) gehörige Analogwerte in verschiedenen Speicherspalten (1250d,1250c,1250b) des Analogspeichers abgespeichert werden, und so dass Analogwerte, die eine schräg über den Bildsensor verlaufende Linie beschreiben, in einem rechteckigen Speicherbereich des Analogspeichers abgespeichert werden.

2. Ausleseanordnung gemäß Anspruch 1, wobei die Ausleseanordnung ausgelegt ist, um Analogwerte, die Bildpunkten zugeordnet sind, bei einem Einspeichern in den Analogspeicher umzuordnen.
